(19) Europäisches Patentamt
European Patent Office
Office européen des brevets

(11) Publication number: 0 118 815
B1

(12) **EUROPEAN PATENT SPECIFICATION**

(45) Date of publication of patent specification: **01.06.88**

(51) Int. Cl.$^4$: **G 01 N 21/31**

(21) Application number: **84101884.9**

(22) Date of filing: **23.02.84**

# (54) Atomic absorption spectrophotometer with feedback.

(43) Date of publication of application:
**19.09.84 Bulletin 84/38**

(45) Publication of the grant of the patent:
**01.06.88 Bulletin 88/22**

(84) Designated Contracting States:
**AT CH FR GB IT LI SE**

(58) References cited:
**DE-A-2 833 553**
**DE-A-2 845 426**
**DE-A-3 005 784**
**US-A-4 314 764**

(73) Proprietor: **Kosizkij, Vladimir P.**
**Nanga-Parbat-Strasse 43**
**D-8000 München 50 (DE)**

(72) Inventor: **Kosizkij, Vladimir P.**
**Nanga-Parbat-Strasse 43**
**D-8000 München 50 (DE)**

EP 0 118 815 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to an atomic absorption spectrophotometer. The atomic absorption spectrophotometer is a device for spectral analysis and is used for quantitative determination of different chemical elements, mainly cations, in solution.

Determination is executed by means of nebulization, of a solution to be analyzed, into an atomizing cell, mainly flame, where the content of the solution (i.e. salts) dissociates into elementary components (atomic vapors). Then the ability of an atomic vapor of the element to absorb light of a specific spectral resonance line is measured. The method is a comparative one, and calibration is necessary. The concentration of an element is determined by comparing the value of the extinction of light by the solution to be analyzed with the value of the extinction with a standard solution of known concentration.

With a few exceptions, current atomic absorption spectrophotometers consist of parts that can be related to three function groups—optical, electronic and elements for converting components of solution into atomic vapor; or successively:

—a hollow cathode lamp or a high frequency discharge lamp;
—optical elements for directing the light beam;
—a monochromator;
—a light receiver e.g. a photomultiplier;
—an electronic amplifier;
—a display or a recorder;
—a nebulizer 9;
—an atomizing cell.

The design of atomic absorption spectrophotometers is constantly being further perfected. Progress is particularly noticeable in the area of electronics. For example, circuits which convert the intensity of light into electric impulses have replaced the use of other amplifiers. Some spectrophotometers also possess the ability to compare the intensity of light of four beams simultaneously.

In the following background discussion the publications listed as [1] to [5] at the end of the description, are referred to.

The Atomic Absorption Spectrophotometer, Model 3030, produced by Bodenseewerk Perkin-Elmer & Co. GmbH, Postfach 1120, D-7770 Uberlingen, FRG [1] is an example of a modern spectrophotometer in current use.

All instruments currently used for atomic absorption analysis, including the Perkin-Elmer, Model 3030, have an essential shortcoming. Namely the absence of feedback between the result of analysis and the supply of the sample solution. The connection between the sample and the result of its analysis (i.e. the information) in currently used instruments is only in the direction from sample to result, with one exception [2] that will be examined later. For instance, any change in the sample causes a change in the result, but not vice versa. The sample and information about this sample move in the instrument only in one direction. In addition, the instrument makes measurements under adjustment and calibration previously set by the operator. Seen in this light the instrument is an executor only.

The method of atomic absorption analysis is very sensitive and the concentration of elements in samples is often higher than the limits of proportionality of calibration. This creates problems for the operator—to dispense precisely, or to calibrate with series of standards and operate in a region of curvature dependence is complicated. An interesting method for solving this problem is described in [2]. According to [2], when the output signal of the amplifier exceeds the limit of the measurable range, one part of the flow of the support gas (air) by-passes the nebulizer and the uptake of solution is reduced.

In [2] the total flow of support gas is constant in atomizing cell. But the flow of analyzed solution is variable. However, the water vapor originating from the evaporated sample forms a considerable part of the components of the flame. Reducing the flow rate of the sample will cause an alteration in the flame specification: flow rate of the flame, its compounds, temperature of flame and its density, size of solids particles in aerosol—will all change.

This leads to total destruction of the former calibration in both the standard solution and the null point (representing the background absorption of the flame at the spectral line). Therefore in [2] three independent regions would need individual calibration with a standard and with a pure solvent. Switching between regions is produced automatically according to the limit of the output signal. Liddell and Pearl first introduced feedback connecting the result of analysis with the procedure for analysis of the sample.

The effectiveness of the method in [2] might also be limited by the nebulizer. The major part of the air's energy is spent on the turbulence and standing waves used to convert the solution into an aerosol. At lower pressures the nebulizer will not be stable and will not operate properly.

The purpose of the invention is to further perfect the atomic absorption method of analysis using feedback between the result of analysis of any sample and the processing of this sample, and applying the principle of self-adjusting.

This concept needs to be explained. The principle of feedback is well known in technology. For instance, the system of automatic level regulation of amplification in a radio-receiver, etc. But here we are dealing with another kind of feedback, so called operational feedback. Let us consider an analogy—the difference between a manual steam engine and Watt's automatic steam engine.

The manual steam engine was operated as follows: the information that the piston was at the extended position was perceived by the eyes of the operator, then this information was transmitted to the brain and combined with the understanding of the task to be performed (i.e. the backward movement of the piston). Thus the operating signal was produced by the brain. This signal in the form of a command was transmitted to the hand of the operator and the hand turned the handle that reversed the direction of the steam. Watt's invention consisted of substituting mechanical feedback for operational feedback. Mechanical feedback permitted the engine to function at a greater speed and with greater precision. It is very important to point out that operational feedback existed in the manual steam engine only because man transmitted the necessary signals. Without this "biological" feedback the manual steam engine would not being operated.

The operational feedback of this kind operates with information. It's feedback signal is not developed immediately but is impeded by the time taken to process the information.

Use of such operational feedback in an atomic absorption spectrophotometer is offered by the present invention. In fact, as in the case of Watt's invention, this operational feedback already exists in the system: spectrophotometer—operator, or spectrophotometer—laboratory. Methodologically, we transfer to an instrument some of the functions that are now executed by the operator or technician through use of his brain and hands. In Watt's invention the operational feedback of the manual engine was replaced by feedback of another category—mechanical.

Unfortunately we cannot offer such a facile solution for the spectrophotometer. In the invention feedback remains in the same category—operational feedback. Consequently the design operates using information and logical conclusions, from which an operating signal will be created. Therefore, for our case, it would be useful to consider first of all in what manner the brain solves analogical problems.

There are now sound grounds for believing that a brain makes any control on behavior in a very original manner. On the basis of received information, current task and past experience the image corresponding to any subsequent operation, in the form of holographic waves, is created before execution. During execution a secondary image is created on the basis of the current execution. The two images are compared constantly to control the execution and its deviation from the first image (this can be considered as a plan). This is the way in which a man reads, writes, executes any movement [3]. The creation of a primary image of each behavior before its execution and constant comparing of the current execution with the primary image is the innate peculiarity of the brain. Such a pattern has been developed over millions of years and is an optimal one for conducting the behavior of living beings.

Really, many elements of the above mentioned biological scheme are used in the present invention. Apart from some possible exceptions due to variations in design, the scheme of instrument operation will generally be, as follows:

1. The size (image of the intermediate parameter in the form of a number is introduced into the instrument. This image answers the question what size the parameter must be, and all following measurements will be compared with it.

2. The instrument makes a test measurement of a solution to be analyzed. This test measurement is executed under definite, but generally not under optimal conditions for analysis of the current solution (i.e. with diminished precision and accuracy). This is necessary in order to obtain at least some information about the solution so that one can begin processing.

3. The data from the test measurement at 2 is used to get a second intermediate parameter.

4. The intermediate parameter at 3 is logically analyzed in order to see if the instrument is in an optimal condition for analysis of the current sample. During analysis the intermediate parameter is compared with the primary parameter.

5. If the analysis at 4 shows that the instrument is optimally adjusted then the solution is again analyzed to get the final result of analysis (i.e. the concentration of element in the solution).

6. If the analysis at 4 does not satisfy the conditions of optimal adjustment of the instrument then the result of the comparison at 4 is used to calculate the operational feedback signal. This signal adjusts the instrument with the aim of arriving at the optimal condition for analysis of the current sample.

7. The procedure is repeated again from 2.

The invention is as defined in Claim 1. Particular embodiments of the invention will now be described with reference to the accompanying drawings, Figs. 1 to 16, which show schematic diagrams of such embodiments, and explanatory graphs.

A first embodiment (Fig. 1) of the invention consists of:

1. Parts already existing in current atomic absorption spectrophotometers, and mostly not shown in Fig. 1,

1.1 a source of light,

1.2 optical parts for directing the light beam from the source e.g. a hollow cathode lamp,

1.3 a monochromator,

1.4 a light receiver e.g. a photomultiplier,

1.5 an electronic amplifier,

1.6 a display,

1.7 a nebulizer 9,

1.8 an atomizing cell.

2. Parts particularly important for the present invention:
2.1 a microprocessor or computer 10,
2.2 a pulse generator 11,
2.3 two pumps 3 and 6 for feeding of solutions,
2.4 two electric step motors 4 and 7 connected to the pumps,
2.5 a mixer 5 to combine two flows of liquid.

In more detail
2.1 the microprocessor or computer 10 must possess the ability to perform the following functions:
2.1.1 to memorize the size of the primary parameter—the number denoting absorption.
2.1.2 to compare numbers.
2.1.3 to calculate operational feedback signals by use of equations and formulae, then transform them into frequency, or alternatively, voltage.
2.1.4 to make logical conclusions and to supply operating commands, including an impediment.
2.1.5 to calculate the calibration constant and the result of analysis by the formulae:

$$K=\frac{A_{st}}{C_{st}\cdot v_{st}}, \qquad C=\frac{A}{v}\left(\frac{C_{st}\cdot v_{st}}{A_{st}}\right) \qquad (1)$$

where:
A—an output signal of electronic amplifier that is a function of the absorption in atomizing cell of spectrophotometer,
C—concentration of the element in the solution to be analyzed,
v—frequency that corresponds to a current operating feedback signal,
K—a constant that corresponds to each current calibration,
st—the index "standard" denotes of the data from the procedure with a solution of known concentration.
Variations in design can modify the above functions.
2.2 The pulse generator 11 is an interface between the computer or microprocessor 10 and electric step motors 4, 7.
2.3 The two pumps 3 and 6 are for feeding solutions to be analyzed, standard solutions and solvent. The operating conditions for the two pumps are different. The first pump 3 feeds solutions that are to be analyzed or standard solutions at a regulated flow rate that can be changed even during analysis of one sample. The second pump 6 feeds the mixture of the solution that is to be analyzed (or standard solution) with the pure solvent at a constant flow rate. The construction of the pumps is not a characterizing part of the invention and can be varied. A peristaltic pump was found to be unsuitable (pulsation and insufficient proportionality between the speed of rotation and the rate of feeding) so we used a specially constructed pump.
A satisfactory result in the proportionality between the speed of motor rotation and the rate of feeding was obtained with the pump shown at Figure 2. The elements 29 and 25 are body portions and were made of textolyt. 22 and 24 are Teflon (RTM) films and the layer 23 was made of Teflon also. The gears 26 and 27 were made of hard Teflon. The tubes 28 were metallic. The pump was screwed together with four screws. This pump ensured satisfactory proportionality between the speed of rotation and the rate of feeding in the range Vmax/Vmin above 100, provided that the gradient of the liquid pressure was not high. V means a volume rate of feeding.

2.3 Electric step motors 4 and 7.
Each pump was connected to an electric step-motor. The electric step-motors were operated by electric pulses in such a manner that each pulse rotates a rotor of motor at a certain constant angle.

2.4 Mixer 5.
The construction of the mixer is shown at Figure 3. The mixer is connected in position 5, Figure 1. The body 31 was made of Plexiglass (RTM), capillaries 30, 32, 33 were metallic.
In the mixer the flow of solution that is to be analyzed or of standard solution is mixed with the flow of solvent. In principle the solution will be adequately mixed in the nebulizer. The mixer was needed to get a more uniform feeding when the rate of flow of the solution to be analyzed through capillary 2 is quite small compared to the rate of flow of the solvent through capillary 1. With this in mind the capillary 33 through which the solution to be analyzed is fed into the mixer had a diminished inner diameter.
The apparatus of Figure 1 operates as follows.
The pump 3 sucks a solution to be analyzed or a standard solution through the capillary 2. Then the solution enters the mixer 5. The electric step-motor 4 is connected to the pump 3 and rotates the pump with variable adjusted speed which is proportional to a frequency of electric pulses from generator 11. The frequency of impulses is determined by the computer (or microprocessor) 10 calculating it for every currently analyzing sample during processing the analysis of the sample.

The pump 6 is connected with the electric step-motor 7. The motor 7 rotates with a constant speed. This speed is determined by impulses coming from the pulse generator 11. The pump 6 feeds solutions at a constant speed and this speed is always greater than the maximum speed reached by the pump 3. Some known analytical methods involve the addition of $La(NO_3)_3$ or $KNO_3$ to the samples and to the standard solutions. The solutions of the above mentioned salts are supplied through the capillary 1. This saves us adding them to each individual sample. The flow rate through capillary 8 is always equal to the sum of the flows through capillaries 1 and 2.

The flow rate supplied by the pump 6 must always be greater than the maximal flow rate from the pump 3, and if pump 3 and 6 are identical, the frequency of impulses supplied to motor 7 must be greater than the maximal frequency supplied to motor 4.

The design shown at Figure 1 makes it possible to change the concentration of solution entering the nebulizer 9 by changing the frequency of pulses feeding motor 4, while the concentration of the sample solution at the supply container remains unchanged.

Currently used atomic absorption methods use the calibration for the whole working range of concentration, without adjusting the calibration for each individual sample. The design of the present invention makes it possible to constantly adjust the instrument to the optimal conditions for analysis of each sample to be analyzed. Changing the concentration of the solution entering the nebulizer, Cn, does not destroy the calibration of the instrument if the flow rate of liquid entering the nebulizer, Vn, remains the same.

The next important characteristic of the design is that the concentration of solution entering the nebulizer (through capillary 8) is proportional to concentration in the sample to be analyzed (in capillary 2) and is also proportional to the flow rate of this sample, through pump 3. This characteristic is very important for further conclusions and must be proved.

The chart of flows for solutions is shown at Figure 4. The symbols mean as follows:

V—flow rate of solvent,

Vs—flow rate of solution to be analyzed (sample or standard),

Vn—flow rate of mixed solution entering the nebulizer,

Cs—concentration of an element in sample to be analyzed,

Cn—concentration of the element in the mixed solution entering the nebulizer.

For one current calibration Vn=constant.

For one sample to be analyzed Cs=constant.

The condition for the correlation of the flow rates (the consequence of the connection of the capillaries) is:

$$Vn=V+Vs \qquad (2)$$

The condition of the constant transported mass of analyzed element:

$$Cn \cdot Vn=Cs \cdot Vs \qquad (3)$$

If we set the operational condition for design, that the frequency to motor 7 is constant, that means the constant rotation speed of the pump 6 and constant flow rate of mixed solution through the capillary 8, it means that Vn=constant. From the other side, the concentration of the element in the native solution, i.e. in capillary 2 also, remains constant, Cs=constant. Putting these two conditions of the design into the formula (3) gives:

$$Cn=K \cdot Vs \qquad (4)$$

where K means a constant in common form.

The design of the pump 3, motor 4, is developed to get the linear dependence between the frequency and feeding rate through capillary 2. Therefore,

$$Vs=K \cdot vs \qquad (5)$$

Transferring (5) into equation (4) we will get the new form of the dependence:

$$Cn=K \cdot vs \qquad (6)$$

where K is a constant in common form, vs—the frequency of impulses to motor 4.

This means that the concentration of the element in capillary 8 which is then introduced to the nebulizer 9. is in linear dependence on the frequency supplied to motor 4 with the condition that the frequency supplied to motor 7 remains constant. Therefore, if the quantity of solution Vn introduced through the nebulizer to the atomizing cell (flame) remains constant, and if pressures, quantities of gases and other conditions remain constant, the calibration of the instrument remains unchanged, but the frequency vs and concentration of the solution Cn changes.

Knowing the frequency vs and determining the output signal of the amplifier of the spectrophotometer and using the data of calibration it is possible to calculate the concentration Cs of the sample to be analyzed. This will be considered in detail later.

Of course, first of all, we must determine the rules for calculating and supplying the frequency also how to calculate the concentration of the element to be analyzed in the initial native sample, Cs (i.e. the result of analysis).

Additionally, the design and the dependences (1—6) permit us to construct the instrument with feedback between the output signal and the supplying on the sample.

We can also introduce to the procedure of atomic absorption analysis a third parameter, i.e. the operational feedback signal, hereafter "OFS". We can design the instrument so that the information will circulate in a closed circle, and during this circulation the information on each current sample that is being analyzed will be used to adjust the instrument to an optimal condition for analyzing the sample. Thus the instrument will be self-adjusting.

Really, the dependence between the concentration of an element in solution entering the nebulizer (Cn), and the signal at the exit of a spectrophotometer (A) can be established by any atomic absorption spectrophotometer. The dependence between (A) and (vs) is established and calculated by microprocessor or computer by calculating the operational feedback signal (OFS). And the dependence between (vs) and (Cn) is established by the construction shown at Figure 1 and is described by formula (6). All constants in the dependences will be excluded due to a procedure of calibration.

A closed circle of moving information exists during execution of the measurements and the instrument's self-adjusting:

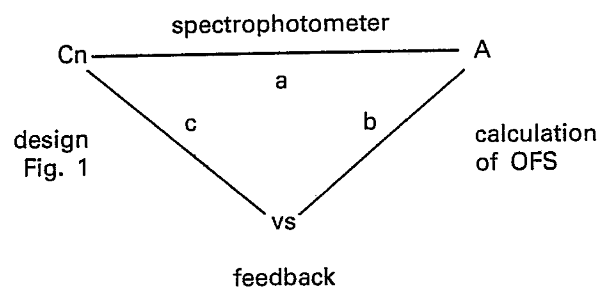


The information during execution of analysis of each sample moves in the directions shown by the arrows.

The optimal conditions for analysis of each sample can be formulated by a set of logical rules. These logical rules are used by the microprocessor or computer for calculating the OFS. The OFS is then used to readjust the instrument. The sequence of the operations that have been executed in the instrument during analysis are shown in points 1—7 mentioned earlier. At the beginning of analysis of each current sample the instrument has no information about the sample. Which is why the test procedure is executed first of all. The test procedure is executed when the instrument is at some definite but not optimal condition for determination of the sample, i.e. A, Cn and vs are not optimally adjusted.

After the test when the instrument has some information about the sample it can be adjusted to the optimal operating condition. Then the measurement is repeated to get the result of analysis—concentration of the element in the native sample.

Variants of design

It is possible to modify the schema Figure 1 in many ways. Here we will point out some of the possible variants.

Variant 1. As Figure 1.

Variant 2. The elements are as at Figure 1, but the pump 6, motor 7, wires 12, are removed. The pneumatic nebulizer 9, is also a pump, and it can suck a maximum of about 6 ml of solution pro minute. For this variant the maximum productivity of pump 4 must be set lower as the nebulizer makes. Both variants 1 and 2 improve the characteristics of the pneumatic nebulizer. Compared to the other parts of an atomic absorption spectrophotometer the pneumatic nebulizer and the atomizing cell are those mainly responsible for noise at the output signal, drift of null position and calibration.

Variant 3. Figure 5 shows the next possible variation in design. The difference between variant 1 and variant 3 lies in the types of pumps used. The numbers at Figure 5 indicate the following:

microprocessor or computer—10; pulse generator 11; wires—34; electric step motor—4; gear—5; a piston in cylinder—6; three-way tap—7; capillary for feeding samples and standard solutions—2; capillary for feeding a solvent—1; peristaltic pump—39; nebulizer—9.

The piston dispenser, shown at Figure 5, can satisfy the proportional correlation between the feeding rate and the speed of motor rotation in the range of feeding rate Vmax/Vmin about 1000. That is the advantage, but the variant requires a special step for washing the cylinder and piston.

The design of a pump, as shown at Figure 2, recommended for use in other variants, allows the usual

mode of operation because the washing is executed by the first portion of the solution that is currently being analyzed.

Variant 4. The connection of the pumps in pairs at the axle, as shown at Figure 6, can broadly expand the proportional range according to the formula [Vmax/Vmin]n. The value in brackets relates to one step and the exponent n—is the sum of the successive steps. This variant allows flowing washing by the convenient way as in variant 1.

Variant 5. All above considered methods make a rigid demand on the proportionality between vs and Vs. This is caused by the combination of two functions in one phenomenon. The frequency vs controls the feeding of a solution and supplies information about the rate of flow of that solution. If these functions relate to different elements then the demand on the proportionality of the flow rate and frequency will be rejected. The variant that possesses this advantage is shown at Figure 7. The elements at Figure 7 are as follows:

the capillary which feeds the solvent—1; the capillary to feed the sample or standard solution—2; thermal diodes—40 and 41; a pump—3; a mixer—5; an electric step motor—4; wires to conduct operating signals—34; wires to conduct impulse from thermal diodes (41)—42; wires to conduct impulse to thermal diode (40)—43; an impulse generator—44; wires to computer—45.

The method for measuring the rate of flow of solution direct in the capillary is based on measurement of the speed of transference of thermal impulses and is described in [4], in which thermistors are used.

Other, possibly innumerable, variants which can also be used, can include: using pumps of different construction or direct measurement of the rate of flow of the sample solution.

However, for all discussed schema common principles can be established. These are shown at Figure 4. It can be described by formula (2) with the following conditions:

$$Vn=V+Vs,\ \text{when}\ Vn=\text{const};\ V>0;\ Vs\geq 0 \qquad (7)$$

The rate at which a sample or standard solution is fed into the instrument can be adjusted during execution of analysis on this sample. But each change in the rate must be compensated for by feeding additional solvent into the mixture. This is to ensure that the rate of feeding of the mixed solution remains constant as it enters the nebulizer.

Calculation of operating feedback signal

This procedure can be executed in different ways, named variants.

Let us consider at first the simple example in which conditions are not optimal, but which serves for explanation. Take the standard solution 50 mg/L Cu. Set the frequency vs=0 in the instrument of Figure 1. Adjust zero. Then set frequency vs=1/10 vs max, and adjust the instrument on "standard 5 mg/L". Then set frequency vs=4/10 vs max, make measurement of concentration; set frequency vs=7/10 vs max, make measurement of concentration, and lastly set vs=vs max, and make measurement of concentration.

The curve that has been obtained in such experiment is represented at Figure 8, where E means the extinction corresponding to mode of operation "A"—"absorption" and K×E—extinction effected by variable amplification, corresponding to "C"—mode of operation, "concentration".

The curve consists of two parts: 0—5 mg/L Cu—the proportional part. The data displayed by the instrument is proportional to concentration of the element in the sample. 5—50 mg/L—the non-proportional part. In the proportional part, concentration C is determined by K×E through the simple equation:

$$C=\frac{Cst}{(K\times E)st}\cdot(K\times E) \qquad (4)$$

where relation Cst/(K×E)st is determined in the step of calibration with a standard solution of known concentration Cst. For simplicity we will put K×E as A—data displayed by instrument, therefore:

$$C=\frac{Cst}{Ast}\cdot A \qquad (5)$$

In the non-proportional part the relations are complex. The dependence of A on C in the range 5—50 mg/L Cu approaches a parabola in the form

$$A=K\cdot C^2+L\cdot C+M \qquad (6)$$

where K, L, M—coefficients, and K is negative.

To compare different methods of calculations in the nonproportional range the experiment corresponding to Figure 8 was prolonged. The frequencies vs=10/50 vs max, vs=27/50 vs max and vs=42/50 vs max were set and measurements of concentrations were made. These data correspond to the

places in middle between the points of the first calibration, and that correspond to feeding into the mixer, standards of 10, 27, 42 mg/L Cu. The concentrations for these points were calculated also by means of data A for these points and coordinates of the points of the first calibration. The sizes of deviations are represented in Table 1.

TABLE 1
Deviation in calculations for nonproportional part.
Calibration by 0, 5, 20, 35, 50 mg/L Cu

| For solutions Cu, mg/L | 10 | 27 | 42 |
|---|---|---|---|
| by equation $A=KC^2+LC+M$ | −2.47% | +0.22% | −0.43% |
| by equation $C=KA^2+LA+M$ | −0.96% | +1.59% | +1.09% |
| by equation $C=NA^3+KA^2+LA+M$ | −2.3% | +1.15% | +0.71% |
| by equation $C=KA^n+LA$ | −2.55% | +1.22% | +0.55% |
| by proportional interpolation | +4.7% | +3.35% | +2.4% |

The deviations shown in Table 1 are maximal for each part of the curve of Figure 8. At other places of the curve they will be smaller and at the points 5, 20, 35 and 50 mg/L Cu will be equal to 0. Of course, the size of deviation would be considerable diminished by increasing the number of coordinates (standards).

Let us consider now the test a sample unknown concentration Cs. Set vs=1/10 vs max. There are five parts to the curve at Figure 8.

1. The signal by the instrument is A $(K\times E)<0.5$. In this case, the real concentration in the analysed solution $Cs<0.5\cdot(vmax/vs)=5$ mg/L. The frequency for the following analytical determination of this sample can be set at once to v max. All calculations of concentration in the following determination can be made by formula (5) with data of calibration with standard 5 mg/L.

Mark the standard corresponding to the upper verge of the proportional part as Cv and corresponding signal Av.

2. The signal is A=0.5. In this case the concentration in the analysed solution Cs=5 mg/L, $(0.5\times vmax/vs)$. The frequency for following analytical determination (i.e. for calculation of result) can be set at vmax.

3. The signal is in the range $0.5<A<5$. In this case the concentration in the analysed solution will be $5<Cs<50$. But in the range $0.5<A<5$ the instrument operates within the proportional part and from formula (5) the value C corresponding to signal A can be calculated. Then multiplying this value by relation vmax/vs=10, we can calculate the concentration Cs in analysed solution, for calculation of the OFS. The operating feedback signal is calculated as a frequency that must be supplied to motor 4, Figure 1, to make the instrument signal for analysed sample equal to Av.

This frequency is calculated from $(Cv\cdot vmax=Cs\cdot v_{OFS}=const)$.

$$v_{OFS}=vmax\cdot\frac{C_v}{Cs} \tag{7}$$

This formula is a consequence of inversely proportional relation in the line corresponding to the function A=const.

The frequency $v_{OFS}$ is set for the motor 4, Figure 1, the measurement of A corresponding to this frequency is executed and the result is calculated by formula (28).

4. The signal is in the range $5<A<30$, see Figure 8. In this case the concentration in the solution will be in the range $50<Cs<500$. Using of one of the methods for calculation of concentration in the region of nonproportional relation, for instance the any method in Table 1, it is possible to calculate approximately the value Cs. With this value from formula (7) the OFS is calculated. It will not affect the calculation of the result of analysis (Cs), and so will be calculated from exact determination of A and v. The best region for $v_{OFS}$ is

$$Av-\Delta Av<A<Av,\ \text{where}\ \Delta Av=0.3Av \tag{8}$$

A is situated in the range the proportional relations near Av.

5. The signal is $A>30$, see Figure 8. In this case the concentration in analysed solution $Cs>500$. This is a case of indefiniteness. In this case, the microprocessor can make the signal diminish the frequency for

instance by 100 times and repeat the test. If in this second test, the signal is in the range $0.5<A<50$, this corresponds to a concentration in analysed solution of $500<Cs<50000$ mg/L and the OFS can be calculated in one step to approach A in the region (8).

The method of calculation OFS can be modified further in many ways. For instance, by setting another number of standard points, by making calibration in the range 0—100 mg/L, or 0—5 mg/L only, by beginning the first test with v=1/100 v max, etc.

Let us establish the main principles for OFS calculation.

1. By referring the current signal in the test operation to the calibrated range of this signal we can get the set of cases. For every case the particular reaction of the instrument and particular method determination for OFS must be programmed.

2. The reaction of instrument and its circuits can be set by simple logic rules, inequalities and formulae.

3. It is useful to distinguish two processes—the test determination of Cs (through A) for OFS calculation and the analytical determination the concentration Cs in a sample. The demand of accuracy of the first can be considerable diminished.

4. According to p. 2 the stage of calibration can be considered as consisting of two parts—the precision calibration for analytical determination (here 0 and 5 mg/L) and accelerated calibration for calculation OFS. For the last calibration the data of the first part are used also. If calibration will be made by two points only (0 and Cv) the last part is absent.

5. Methodologically, the method calculation by referring the signal only to the range of proportional relations (0—5 mg/L) is a particular case of the method of proportional interpolation with more points, and the last is a particular case of approximation.

6. All methods for calculation Cs represented in Table 1 satisfy the demands in accuracy for calculation of OFS.

7. Other methods to make reinstallation also can be realized including monotonous installation and using separate circuits for calibration and calculation of OFS and Cs.

8. Due to the range of proportional relations in scales E [5] and K×E, both scales can be used for fulfilment. In Figure 9, the correlation between the two scales is shown, for spectrophotometer Perkin-Elmer, model 432. The parts of proportionality 0—5 mg/L are combined completely by vertical scale selection. At the region of higher concentration, the pattern of curves is different. But taking into account the principles 3 and 4, the problem of the precision approximation that exists for current spectrophotometers for calibration by several standards is avoided for the present invention.

Distinction three parameter method and current AA-spectroscopy and properties of calibration surface

The principal distinction between a usual spectrophotometer and a spectrophotometer with feedback is that the first operates with two variable parameters—A and C, but the second operates with three—A, C and v, where:

A—"absorption", in general the signal by amplifier,

C—concentration in analysed solution,

v—frequency of impulses, here proportional to speed of feeding.

1. For current atomic absorption spectrophotometer the dependence A and C an be represented by calibration curves, as it is shown at Figure 10. One curve relates to one calibration. Absorption is represented in units of extinction or a quantity proportional to it (i.e. due to the logarithmic amplifier) and consists of two parts. The part of the proportional dependence A and C is shown at Figure 10 as unbroken line. The part of nonproportional dependence A and C is shown as the dotted line.

The dependence in the proportional part is expressed by formula

$$A=K\cdot C \tag{9}$$

and the coefficient K is determined by calibration of the instrument with standard solution to get working formula (5). The dependence in the nonproportional part is approximately described by formula (6). This region rarely used.

2. For the three parameter method the dependence of A on C is converted into dependence of A on the product C×v.

Really, for solution entering the nebulizer the concentration is Cn and formula (9) can be rewritten in the form:

$$A=K\cdot Cn \tag{10}$$

taking Cn from the formula (1):

$$A=K\cdot Cs\cdot Vs$$

where Vs—speed of feeding, and $Vs=K\cdot vs$, therefore:

$$A=K\cdot Cs\cdot vs \tag{11}$$

where index "s" relates directly to analysing solution, sample.

In formula (11) there are three variable parameters. The dependence of three variable parameters is expressed geometrically as a surface. When for the usual atomic absorption spectroscopy the calibration graph is expressed by a line at a plane, see Figure 10, then for the three parameter method the calibration graph is expressed by a surface in a space. The lines at this space will be got as sections of this surface by the planes that express the constant value for one of these parameters, i.e. the functions A=const, C=const, v=const.

Accordingly, if we take v=const, for instance v=v max, at the crossing of the calibration surface with the plane v=v max, the curve will be typically of the usual AA-spectroscopy, corresponding to constant feeding vmax. For every other value of v, the new curve will correspond to a new calibration of instrument with a new value of feeding. Therefore, the usual two parameter AA-spectroscopy is a particular case of the three parameter AA-spectroscopy, when third parameter is fixed in constant value (constant v, constant feeding).

In Figure 11 the calibration surface is represented in coordinates A, C, v and the sections with all planes are pointed. The systematic explanation of method for building this surface is omitted here, but necessary characteristics to construct modes of operation (algorithms) and formulae will be considered.

The surface is restricted by four lines: OC, CED, DBv and vO, Figure 11. The line CED corresponds to the maximal value of parameter C. The line DBv corresponds to the maximal value of parameter v that is possible by condition of operation (v=v max). The lines OC and Ov are on the axis. The lines OC, Ov and parts of lines—CE and vB are straight. The parts BD and ED are curves.

The line CED means the function A=fv, when C=Cmax=const, where f—a function in a general form. The line vBD means the function A=fC, when v=vmax=const. (This would be a particular case of usual two parameter AA-spectroscopy when feeding is constant corresponding to v max. The line vBD would be a typical calibration line, as at Figure 10, but in the plane vBD at the height Ov). The line Ov at the axis v means the function A=fv, when C=O. The line OC at the axis C is the function A=fC, when v=O.

The shaded areas are in the planes that are parallel to the plane vOC. The top concave sides of these areas are situated in the calibration surface. These lines are a set of functions C=fv, when A=const. These are the functions of inverse proportionality: C · v=const=A/K. Out of the calibration surface these lines would approach assymptopically the planes vOA and AOC.

The calibration surface OCEDBv, Figure 11, in form is a concave surface that has a slope from the line vBD to the line OC and also outside from the line vBD to line CED.

Further let us take into consideration only those characteristics of function (11) and the calibration surface that will relate to the deduction of the operational modes for instrument.

1. The function (11) is monotonous. Every pair of values of the two parameters corresponds only to one value of the third parameter. The one value of any one parameter corresponds to the pair of values of the other two parameters. Consequently, for instance, to calculate C we need to know only one pair A and v. By modification of (11):

$$C=\frac{A1}{K \cdot V_1}=\frac{A2}{K \cdot V_2}=\ldots=\frac{An}{K \cdot Vn} \qquad (12)$$

This property of the function (12) of an additional degree of freedom ensures the possibility of making any adjustments during analysis of any one sample, and moreover, of using simple logic rules to adjust into the optimal condition for analysis of any sample.

2. For every adjustment of the instrument, such ingredients of this adjustment as:
flow of gases through a burner—air and acetylene, for instance,
flow of liquid through a nebulizer,
pressure of gases, pressure of air to a nebulizer, position of a burner,
current to a lamp, adjustment amplifier, etc.—correspond to one calibration surface. They can not be changed without alteration of the calibration.

3. The changes in values Vs, vs, Cs do not alter the calibration.

4. If the limits of parameters Cs>Cmax, vs>vmax, A>Amax, are too broad—this would not alter the calibration but would lead to the expansion of the surface area by shifting lines CED or vBD, Figure 11.

5. The coefficient K for each point of the calibration surface can be presented as a product of three coordinates relating to this point. From equation (11) it follows that:

$$K=\frac{A}{Cs \cdot vs}=\frac{OA1}{OC_1 \cdot Ov_1} \qquad (13)$$

If $OA_1$ is constant, this relates to the lines at the surface where absorption is constant, at Figure 11 to the upper sides of the shaded areas, then

$$OC_1 \cdot Ov_1=OC_2 \cdot Ov_2=\ldots=OC_n \cdot OV_n \qquad (14)$$

Consequently, the coefficient K is constant for every line at the calibration surface, if this line is a line A=const.

6. The section BEE'B' where A=Av=constant, Figure 11, has the particular characteristics—it divides the calibration surface into two parts:

OvBEC—the field of proportional relations,

BDE—the field of nonproportional relations.

This distinction is analogous to the distinction of curves in the two parameter AA-spectroscopy, and relates to the property of the coefficient K in the equation (11). In the first field, K=const, when A changes. In the second field K=const, when A=const, and K is changed when A changes.

The curvature dependence K from A in the field of nonproportional relations is caused by a quanto-optical phenomenon in the atomizing cell. And as rule, for every element, the individual verge size Av exists and can be established for every model of instrument.

Methods for execution of analysis by three-parameter AA-spectroscopy

The atomic absorption method of analysis with feedback carried out by the method of the present invention possesses the degree of freedom in relations between parameters and must have many variants for procedure of execution the analysis. Let us consider part of them but in the systematic succession: the variants related to the proportional part of relations, the variants that relate to the nonproportional part of relations and the variants that related to both parts. Our purpose will be to find the theoretically optimal variant.

Method 1. Take two points "1" and "2" at the calibration surface in the part of the proportional relations, see Figure 12. For every point according to the equation (11)

$$A_1=K\cdot C_1\cdot v_1 \text{ and } A_2=K\cdot C_2\cdot v_2 \quad (15)$$

where $A_1$, $C_1$, $A_2$, $C_2$ are the coordinates of points 1 and 2. By removing the coefficient K from the equations (15) the equation can be got:

$$C_2=\frac{A_2}{v_2}\left(\frac{C_1\cdot v_1}{A_1}\right) \quad (16)$$

Therefore the concentration $C_2$ can be calculated (if it is an unknown concentration) making the measurement of absorption $A_2$ for this solution and registering the frequency $v_2$ with which the $A_2$ was obtained. The relation in the brackets must be estimated by separate procedure with the solution 1 with known concentration $C_1$. This procedure is named calibration, when the $A_1$ and $v_1$ are estimated and $C_1$ is known. The obvious limitations for this procedure by Method 1 are the following: $0<A_1\leq A_v$ and $0\leq A_2\leq A_v$.

Method 2. It is known from the theory of measurement that any quantity is measured with smaller relative error mistake as the absolute quantity is large, while the method of measurement remains the same. Also the absorption would be measured with more accuracy when A=Av, i.e. the maximal value for method 1. Therefore, the second method must be:

$$C_2=\frac{A_2}{v_2}\left(\frac{C_1\cdot v_1}{A_1}\right), \text{ when } A_1=A_v \text{ and } 0\leq A_2<A_v \quad (17)$$

The condition $A_1=A_v$ can be obtained by selection $C_1$, when $v_1$=const or by adjusting $v_1$ when $C_1$ is set. The condition for that $C_1\geq C_v$.

Method 3. It is possible also to adjust $v_2$ according to the conditions: If $C_2>C_v$, then $A_2=A_v$ and if $C_2<C_v$ then $v_2$=vmax, see Figure 11. In other words, it is the condition to get $v_2$ or $A_2$ so high as it possible to get in the field of proportionality of the calibration surface. The formula of method 3 is:

$$C_2=\frac{A_2}{v_2}\left(\frac{C_1\cdot v_1}{A_1}\right) \text{ with the conditions:}$$

$$\text{if } C_2<C_v \text{ adjust } v_2 \text{ by condition } v_2=v\max, \quad (18)$$

$$\text{if } C_2>C_v \text{ adjust } A_2 \text{ by condition } A_2=A_v. \quad (19)$$

In the case (19) the adjustment of $A_2$ can be executed only by adjusting of $v_2$. One of the methods for OFS calculation must be used for calculation that $v_2$ that corresponds the condition $A_2=A_v$.

Method 4. The calculation with reference to the intermediate frequency.

It is possible to produce calculation $C_2$ (result of analysis) in two steps. First in the profile $C_2$=const, then—in the profile $A_1$=const, see Figure 12. In the first profile, calculate the frequency $v_3$, that must supply

the solution $C_2$ to get the value of absorption $A_1$, that point 1 has. From the similarity of the triangules at the profile $C_2$, Figure 12:

$$v_2/v_3=A_2/A_1 \text{ or } v_3=v_2\frac{A_1}{A_2} \quad (20)$$

Then execute the second step of calculation, in the shaded profile already, Figure 12. The condition of the line in this profile is $A=K \cdot C \cdot v$ when A=const. From here: $C_1 \cdot v_1=C_2 \cdot v_3=A_1/K$=const, and:

$$C_2=C_1 \cdot \frac{v_1}{v_3} \quad (21)$$

or in combining with (20):

$$C_2=C_1\frac{v_1 \cdot A_2}{v_2 \cdot A_1} \quad (22)$$

This two step method of calculation is similar to the method 1 and formula (16) as if it were executed in one step.

There are more methods of calculation in the proportional part but they will be in the scope of formula (16). Let us consider in short the nonproportional part.

Method 5. The calculation with reference to the calibration section.

For getting the calibration section, as is shown at Figure 13 ($C_{st}$, D, B), the solution of known concentration Cst is supplied through capillary 2, Figure 1. Frequency v=0 is set and zero is adjusted. Further the frequency is increased step-by-step. For every frequency the signal A is measured. The set of pairs v and A will be the curve Cst-B, at Figure 13. This curve is function A=fv when Cst=const. The dependence A=fv can be represented, for instance, by the polynomial $A=B \cdot v^2+C \cdot v+D$ where B, C and D are coefficients or by other approximation.

Then the solution of unknown concentration $C_1$ is fed by some arbitrary frequency $v_1$, see Figure 13, and the value $A_1$ is measured. The instrument calculates the frequency vst in the calibration profile Cst-B that would correspond to the value $A_1$.

While in the profile A1=const, Figure 13, the inversely proportional dependence exist: $C_1 \cdot v_1=C_{st} \cdot vst$, and from here:

$$C_1=Cst \cdot \frac{vst}{v_1} \quad (23)$$

Therefore, the method 5 includes calculations in the calibration section to establish vst and additional calculation by formula (23).

Method 6. The calculation with reference to the point of standard.

In Figure 14 the crossing of four sections are shown. The parallel crossings are the frequencies. The following correlations exist between four frequencies at the places of crossing:

$$\begin{matrix} A_1=K_1 \cdot Cst \cdot v_2=K_1 \cdot C_1 \cdot v_1 \\ Ast=K_2 \cdot Cst \cdot v_3=K_2 \cdot C_1 \cdot v_4 \end{matrix} \quad \text{or:} \quad \begin{matrix} Cst \cdot v_2=C_1 \cdot v_1 \\ C_{st} \cdot v_3=C_1 \cdot v_4 \end{matrix} \quad \text{or:}$$

$$\frac{v_2}{v_3}=\frac{v_1}{v_4} \quad \text{or:} \quad v_4=\frac{v_1 \cdot v_3}{v_2} \quad (24)$$

Here, Figure 14, the values $A_1$ and $A_{st}$ are measured by instrument: $A_1$—with frequency $v_1$ ($v_1$ can be arbitrary), $A_{st}$—with frequency $v_3$ during calibration. $v_2$ is calculated as it was in method 5, i.e. with data of calibration (A, v) for profile Cst. Then the value $v_4$ can be calculated by formula (24). After that the concentration $C_1$ can be calculated directly in the profile $A_{st}$, Figure 14, by formula:

$$C_1=C_{st} \cdot \frac{v_3}{v_4} \quad (25)$$

By combining (24) and (25) it would be got inversely the method 5, and the calculation $C_1$ in profile $A_1$.

Method 7. All calculations are executed as in method 6. But the profile $A_{st}$ is taken at the verge position where the absorption is $A_v$. That gives the unification with methods 2 and 3 where calculations also were related to the profile $A_v$. The difference consists in approaching the profile from other side.

Method 8. Calculations of concentration in methods 1—7 are based on the measurements of A with arbitrary frequency v (while we have no information on a sample before the test). This condition can be far from the optimal for determination of the sample, and thus leads to inaccuracy.

In principle the best tactics of analysis consists in that the procedure of analysis is divided. Each of the methods 1—7 could be used for test analysis and for getting the first value of Cs. This value will be used for calculation OFS. With the new frequency (set by OFS) the second analytical determination is executed for calculation of the result of analysis.

Therefore the tactics 1—7 can be modified by repeating the measurement with new calculated frequency.

Method 9. (Optimal variant). To get precision Av by returning the frequency is difficult, especially from the far range. But the difficulty is overcome if as a criterion would be set a zone in a range, for instance, from $A_v$ to A, where A is lower than $A_v$ by 20—50%.

In Figure 15, the range selected in such manner is shown as a shaded rectangle. This is a projection from a calibration surface at plane AOC. The axis v at this projection is transformed in the point 0. The value Av for this case is 0.32E (Cu). For this zone the value for calculations OFS is selected as An in the middle of the zone (0.272E). All range will be expressed as $An \pm \Delta A$.

Therefore the method 9 consists of the method 8, but the size Av is taken as a range $An \pm \Delta A$. The criterion of being into the zone is:

$$An - \Delta A < A < An + \Delta A \quad (26)$$

This is essentially the control criteria defined in claim 1. The adjustment of the frequency in the condition (26) is also alternatively executed by an analogous method without calculation. The instrument can continuously measure A and compares it with An. In dependence on size and sign of the difference the frequency is continuously changed better with variable speed. When condition (26) is reached the analytical measurement with constant v is executed.

The values Av were taken as a reference data for every element and introduced in the program of instrument. Corresponding Cv were established by separate tests and then introduced in the program as a reference. However, the instrument can determine the parameters An, ΔA corresponding to every calibration.

Optimal algorithm for operation

In short the main definitions.

1. The primary parameter that is introduced in the instrument and that answers the question what size of intermediate parameter must be—is the range of absorption $An \pm \Delta A$.

2. The intermediate parameter that is compared against primary one—is the absorption of any measurement.

3. Criterions of analysis.

—difference $A - An$,

—sign of the difference,

—satisfaction the inequation (26)

4. Operate Feedback Signal—the frequency that must lead to satisfaction of inequation (26) for analysed sample.

5. Feedback—the connection between the signal at the exit of amplifier and speed of feeding of analysed solution. The way of feedback transmission—microprocessor, logic analysis, calculation of frequency, producing the frequency, motor rotation, pump rotation, movement of analysed solution.

The order of operation

1. Calibration

The solution of known concentration Cst is fed by the capillary 2, Figure 1. The concentration Cst is taken in the range from Cn to Cmax, where the concentration Cn is determined as the solution that gives An when v=max. The practice had shown that for initial frequency, it is preferable to take 1/10—1/15 vmax. With this frequency the measurement with standard solution is executed. The instrument adjusts the frequency for satisfying (26) and then makes an analytical determination with a standard solution. The expression Cst · Vst/Ast in form of a number is retained in the memory.

2. Measurement of sample

The solution of unknown concentration C is fed by the capillary 2, Figure 1. The first measurement of absorption is produced with the frequency 1/10 vmax. The value of A is analysed against An by categories:

a) satisfaction of $An - \Delta A < A < An + \Delta A$ (26)

b) the difference $A - An$,

c) the sign of the difference $A - An$.

If A satisfies to the inequality (26) then the measurement is repeated with the same frequency but with a longer time of measurement. Then concentration is calculated by formula

$$C=\frac{A}{V}\left(\frac{Cst\cdot Vst}{Ast}\right) \qquad (28)$$

If the test measurement does not satisfy the inequality (26) then the OFS is calculated and transmitted to motor 4, Figure 1. The second test measurement is executed and analysed. If the second test satisfies the condition (26), the analytical determination begins and result of the analysis is calculated by formula (28).

Advantages of the invention

The advantages of the three parameter method of analysis according to the invention and compared to the current atomic absorption method and to the prototype [1] are following:

1. The large expansion of the working range of concentration of analysed elements where the low limits are determined by the detection limits and the high limits by saturation of solutions or construction limits (not by curvature of graphs).

2. The calibration is produced by one standard solution for all working range of concentration.

3. The standard solution can be taken in a very large range.

4. The concentration for standard solution can be taken the very high that has an advantage in stability during storage and diminishes the volume of the standards.

5. Lower dependence on viscosity and density of solutions.

6. The instrument determines the optimal condition for analysis of every individual sample, makes retuning at this condition and make analysis in the optimal for sample condition.

7. An operator is saved of calculation and work on preparation of analysed solutions in convenient analysis form. The instrument operates automatically.

8. Increased degree of automation.

9. Increased precision and accuracy for analysis of solutions high concentration, because the instrument sets those into the optimal conditions.

10. Decreased time of analyses especially for series of samples.

The following apparatus was used for the investigation.

1. The atomic absorption spectrophotometer, model 360, produced Perkin-Elmer, Norwalk, USA, with flame acetylene-air, a burner slit—10 cm. The model 360 has no microprocessor, possesses the indication by pointer millivoltameter.

2. Two pumps of the construction of Figure 2. The pumps were connected in the system as in Figure 1. The pump supplying the solutions in the nebulizer, 6, Figure 1, has characteristics:

—speed of rotation—6 turns/sec,
—thickness of gears—2 mm,
—productivity—near 5,2 ml/min,
—the frequency to the operator motor—300 H2.

The pump supplying the analysing solutions:

—speed of rotation—from 0.06 to 6 turns/sec,
—thickness of gears—1,8 mm,
—productivity—from 0.047 to 4.7 ml/min,
—the frequency to the operating motor—min—3 $H_2$, max—300 Hz.

3. The synchronous step motors were an original construction made from pulse counters.

4. The mixer was as shown in Figure 3.

5. Capillaries were plastic.

6. The nebulizer.

7. The pulse generator and amplifier individual construction.

8. The digital voltmeter.

9. The digital display.

10. The digital computer.

The spectrophotometer operated in modes absorption and concentration. The digital voltmeter was switched in parallel with the pointer millivoltameter of spectrophotometer. The information from the digital voltmeter and the pulse generator were constantly supplied to the computer. The value of concentration in a standard solution were introduced manually. The program of computer executed the following operations:

1. Calculate the dependence v from A by formula $A=BV^2+DV+C$ on the set of pairs A and v, when Cst=const (the profile Cst—B at Figure 16).

2. Calculate frequency vv that corresponds to the reference value Av with the dependence by p. 1 for standard solution Cst. Av was picked out from inquiry data in the analytical instruction to the spectrophotometer (vv at Figure 16).

3. Calculate frequency $v_a$ (Figure 16) by the formula p. 1 as a frequency that must give for solution Cst the absorption signal equal to the signal A that is obtained for the sample.

4. Calculate $v_{OFS}$ (Figure 16) for sample solution by the formula:

$$v_{OFS}=vmax/10 \cdot \frac{v_v}{v_a} \quad (29)$$

5. Calculate the calibration number

$$Cst \cdot v_v/A_v \quad (30)$$

6. Calculate the concentration by the formula:

$$C=\frac{A}{v}\left(\frac{Cst \cdot vv}{Av}\right) \quad (31)$$

From the set of used elements and operations indicated at the beginning of the description it is clear that the plant modeled the complex variant that had used:

a) the calculation with reference to the point of standard (method 6, crossing of four sections, Figure 14),

b) the calculation in the profile Av (method 7),

c) the tactics of independent measurements—first for calculation of OFS, and second measurement for calculation the result (method 8).

Calibration

The solution 50 mg/L Cu was taken for calibration. First distilled water was supplied through capillary 2, Figure 1, and spectrophotometer was adjusted at zero. Then the standard solution was supplied through capillary 2, Figure 1, with the frequency to motor V=3 Hz, and extinction or K×E were measured. When measurement was in scale K×E ("concentration") the amplification was adjusted once for calibration and measurement. The frequency was increased step-by-step up to maximum 300 Hz, more as 10 steps. Every time the pair A and v was introduced into computer. Then computer calculates the coefficients B, C, D in formula p. 1 selecting three calibrated pairs A and v (A—extinction or K×E) nearest to Av. With this coefficients the vv was calculated using Av. Then with frequency vv the plant made measurement Av. This last value Av, vv and Cst were the data for calculation of calibration number according to the steps 1—7 in the introduction.

Measurement of samples

A solution of unknown concentration was supplied through capillary 2, Figure 1. The start frequency was set at 30 Hz. The plant made measurement during 3 sec. The value of absorption (extinction or K×E) displayed by digital voltmeter and by pointer millivoltmeter. Simultaneously, the value was introduced into computer and the computer made its calculations. The value of concentration was displayed by the digital display, and new calculated frequency $v_{OFS}$ was supplied to the pump motor. After a delay of 5 sec, the spectrophotometer automatically began the next measurement on the same sample. The series of samples were analysed. If a value of absorption for a sample happened to be above the value for Cst when vmax, the current frequency was diminished in 10 times and the measurement was repeated.

The above apparatus was developed for research purpose and modelling the approximations. It was established that for range of concentration in a sample $0<C<Cmax$, where $Cmax=100$ Cv, the automatic adjustment in the range $Av\pm0.15$ Av for Cu, Zn, Fe was executed by one circle when the start frequency is 0.1—0.07 vmax.

Publications

[1] "Model 3030 Atomic Absorption Spectrophotometer" Bodenseewerk Perkin-Elmer Co. GmbH, Bucklet 2242/2.82 West Germany, 10 pages.

[2] Liddell P. R., Pearl A. S., United States Patent 4,314,764 Feb. 9, 1982.

[3] Pribram K. H., "Languages of the Brain. Experimental Paradoxes and Principles in Neuropsychology", Englewood Cliff/N.J. Prentice-Hall, 1971, pages 432.

[4] Miller T. E., Chamberlin T., Tuinstra R., Small H., "Precise Measurement of Low Flow". Abstracts, Pittsburgh Conference and Exposition on Analytical Chemistry and Applied Spectroscopy, 1982, March 8—13, Report No. 024, page 24.

[5] Welz B., "Atom-Absorption-Spektroskopie". Verlag Chemie GmbH, Weinheim/Bergstr., 1972, p. 13.

**Claims**

1. Atomic absorption spectrophotometer with feedback, comprising a source of light to produce a

beam of light, optical parts for directing said beam of light through an atomizing cell and then into a monochromator for selecting a part of said beam corresponding to a specific spectral line representing an element of interest and then directing said selected part of said beam of light onto a light receiving photomultiplier to convert the intensity of said part of said beam into a corresponding electronic signal representing the absorption, an electronic amplifier for amplifying said signal, a display that indicates the size of said electronic signal, and a nebulizer (9) to nebulize the solution to be analysed in said atomizing cell, wherein a first capillary (8) supplying solution to said nebulizer (9) is connected at one end to said nebulizer and its second end to second and third capillaries (1, 2), a solution to be analysed is supplied through said third capillary (2) and a solvent or other solution not containing said element is supplied through the second capillary (1), said solution to be analyzed is supplied via a pump (3, 5—6) driven by a motor (4), and a computer (10), processing the absorption signal and controlling said motor (4), such that, if said absorption signal differs from a value stored in said computer, the flow rate of said solution to be analyzed through the third capillary (2) is varied during analysis, while the sum of flow rates through said second and third capillaries is maintained constant, to maintain said absorption signal within a predetermined range of values around said stored value.

2. Atomic absorption spectrophotometer with feedback as claimed in claim 1, wherein the solution through the first capillary (8) connected direct to said nebulizer (9) is supplied by a further pump (6) controlled by a further motor (7).

3. Atomic absorption spectrophotometer with feedback as claimed in claims 1 and 2, wherein said motors (4, 7) are electric step motors controlled by electric pulses supplied by said pulse generator.

4. Atomic absorption spectrophotometer with feedback as claimed in claims 1, 2 and 3, wherein the feedback loop provided between the computer and the motor (4) is used for selftuning to adjust said spectrophotometer to approach the optimal condition to analyze any said solution supplied through said third capillary (2) the flow rate of said solution in said third capillary (2) being determined directly in said third capillary (2) or indirectly as a function of speed of rotation of said pump (3) or frequency to said motor (4), the output signal of the amplifier being analyzed in the computer (10) to produce a corrective feedback signal in the form of a new pulse frequency to said motor (4) that varies the flow rate in said third capillary (2) and thereby the concentration of the element to be analyzed in said atomizing cell (13) to avoid alteration of the native solution to be analyzed or calibration conditions of said spectrophotometer, said concentration of the element in said solution to be analysed being calculated by the computer using the formula

$$C=\frac{A}{V}\left(\frac{Cst \cdot Vst}{Ast}\right)$$

where

C—concentration of element in the solution,

A—output signal of the amplifier,

V—speed of feeding of said solution to be analyzed or any proportional function of said speed,

Cst, Vst, Ast—equivalent parameters obtained during the procedure with solution of known concentration during the calibration step.

**Patentansprüche**

1. Das Atomabsorptions-Spektrophotometer mit Rückkopplung besteht aus einer Lichtquelle, die einen Lichtstrahl herstellt, dieser Lichtstrahl wird durch eine Atmosisierungszelle in einen Monochromator gelenkt, um den Anteil des erwähnten Lichtstrahls, der der spezifischen Spektrallinie, des zu analysierenden Elementes entspricht, abzutrennen, dieser Anteil des Lichtstrahls wird auf einen lichtempfangenden Photomultiplier gelenkt, um die Intensität dieses Lichtstrahls in ein entsprechendes elektronisches Signal umzuwandeln, das dem Absorptionssignal entspricht; das Gerät besteht darüberhinaus aus einem elektronischen Verstärker, einem Anzeigeteil, das das erwähnte elektronische Signal wiedergibt und einem Versprüher, der die zu analysierende Flüssigkeit in die Atomisierungszelle fördert, gekennzeichnet ist es dadurch, daß eine Kapillare (8), die die Lösung zum Versprüher (9) transportiert, auf der einen Seite mit dem erwähnten Versprüher und auf der anderen Seite mit einer zweiten und dritten Kapillare (1, 2) verbunden ist; die zu analysierende Lösung wird durch die dritte Kapillare (2) gefördert und eine Lösungsmittel oder eine andere Lösung, die das zu analysierende Element nicht enthält, wird durch die zweite Kapillare (1) zugeführt; die zu analysierende Lösung wird über eine Pumpe (3, 5—6) gefördert, die von einem Motor (4) angetrieben wird; ein Computer (10) verarbeitet das Absorptionssignal und kontrolliert den erwähnten Motor (4), so daß bei einer Abweichung des Absorptionssignals von einem im Computer gespeicherten Wert, die Durchflußrate der erwähnten Lösung durch die dritte Kapillare (2) während des Analysenvorgangs verändert wird, wobei die Summe der geförderten Flüssigkeitsmenge durch die erwähnte zweite und dritte Kapillare konstant gehalten wird, um das erwähnte Absorptionssignal innerhalb eines vorher festgelegten Bereiches von gespeicherten Werten zu halten.

2. Das Atomabsorptions-Spektrophotometer mit Rückkopplung wird nach Anspruch 1, dadurch gekennzeichnet, daß die Lösung durch die erste Kapillare (8) dem erwähnten Versprüher (9) über eine Förderpumpe (6), die von einem Fördermotor (7) kontrolliert wird, zugeführt wird.

3. Das Atomabsorptions-Spektrophotometer mit Rückkopplung wird nach Anspruch 1 und 2 dadurch gekennzeichnet, daß die erwähnten Motoren (4, 7) elektrische Schrittmotoren sind, die durch elektrische Impulse gesteuert werden, die ein Impulsgenerator liefert.

4. Das Atomabsorptions-Spektrophotometer mit Rückkopplung wird nach Anspruch 1, 2 und 3 dadurch gekennzeichnet, daß die Rückkopplungseinheit zwischen dem Computer und dem Motor (4) eingerichtet ist, um die Selbstjustierung des erwähnten Spektrophotometers zu bewerkstelligen; dadurch sollen optimale Bedingungen geschaffen werden, um jede beliebige Lösung zu analysieren, die durch die erwähnte dritte Kapillare (2) gefördert wird; die Flußrate der erwähnten Lösung in der erwähnten dritten Kapillare (2) wird direkt in der dritten Kapillare (2) oder indirekt als Funktion der Umdrehungsgeschwindigkeit der erwähnten Pumpe (3) oder durch die Frequenz fur den erwähnten Motor (4) bestimmt; das Ausgangssignal des Verstärkers wird im Computer (10) verrechnet, um ein korrigiertes Rückkopplungssignal in Form einer neuen Pulsfrequenz für den erwähnten Motor (4) zu schaffen, der die Flußrate in der erwähnten dritten Kapillare (2) verändert, wodurch auch die Konzentration des zu analysierenden Elementes in der erwähnten Atomisierungszelle (13) verändert wird; auf diese Weise wird verhindert, die zu analysierende Lösung oder die Eichbedingungen verändert zu müssen; die erwähnten Konzentration des Elementes in der erwähnten zu analysierenden Lösung werden durch den Computer nach folgender Formel berechnet:

$$C = \frac{A}{V}\left(\frac{Cst \cdot Vst}{Ast}\right)$$

wobei

C—die Konzentration des Elementes in der Lösung ist,

A—das Ausgangssignal des Verstärkers,

V—die Fördergeschwindigkeit der erwähnten, zu analysierenden Flüssing oder jede proportionale Funktion der erwähnten Geschwindigkeit,

Cst, Vst, Ast—Parameter, die während der Eichung mit Lösungen bekannter Konzentration erhalten werden.

**Revendications**

1. Spectrophotomètre du type à absorption atomique, ledit spectrophotomètre compartant une rétroaction, une source de lumière produisant un faisceau lumineux, des composants optiques pour quider ledit faisceau à travers une cellule d'atomisation puis dans un monochromateur destiné à la sélection d'une partie dudit faisceau correspondant à une raie spectrale spécifique représentant un élément soumis à l'analyse, lesdits composants dirigeant enscute ladite partie dudet faisceau sur un photomultiplicateur afin de convertir l'intensité de celle partie dudit faisceau en un signal électronique représentant l'absorption; un amplificatéur électronique pour amplifier ledit signal, un dispositif d'affichage pour indiquer la farme dudit signal électronique et un nébulisateur assurant la nébulisation de la solution à analyser dans ladite cellule d'atomisation; spectrophotométre dans lequel un premier capillaire (8) déliurant ladite solution audit nébulisateur est relié par une première sortie audit nébulisateur et par une seconde sortie à des second et troisième capillaires (1, 2); ladite solution est déliurée à travers ledit troisième capillaire (2) et un solvant ou autre solution ue contenant pas ledit élément est fourni à travers la second capillaire (1), ladite solution à analyser étant acheminée grâce à une pompe (3, 5—6) entraînée par un moteur (4); un calculateur (10) traite le signal d'absorption et commande ledit moteur (4) de façon telle que si ce signal diffère d'une valeur mise en mémoure dans ledit calculateur (10) le débit de ladite solution à travers le troisième capillaire (2) est modifié pendant l'analyse, la somme des débits à travers lesdits second et troisième capillaires (1, 2) étant maintenue constante afin de maintenir ledit signal d'absorption à l'intérieur d'un domaine prédéterminé de valeurs au voisinage de ladite valeur mise en mémoire.

2. Spectrophotomètre selon la revendication 1, dans lequel la solution circulant dans le premier capillaire (8) est délurée par une autre pompe (6) entraînée par un autre moteur (7).

3. Spectrophotomètre selon les revendications 1 et 2, dans lequel lesdits moteurs (4, 7) sont des moteurs électriques pas-à-pas commandés par des impulsions électriques fournies par un générateur d'impulsions.

4. Spectrophotomètre selon les revendications 1, 2 et 3, dans lequel la boucle de rétroaction est située entre le calculateur et le moteur (4) et assure un réglage automatique dudit spectrophotomètre afin que ce dernier fonctionne suivant des conditions optimales pour analyser toute solution déliurée à travers ledit troisième capillaire (2), le débit de ladite solution dans ledit troisième capillaire (2) étant déterminé directement dans ledit troisième capillaire (2) ou in directement en tant que fonction de la irtesse de rotation de ladite pompe (3) ou de la fréquence delivrée audet moteur (4), le signal de sortie dudit amplificatéur étant analysé dans le calculateur (10) afin de fournir un signal correctif de rétroaction sous la

farme d'une nouvelle fréquence d'impulsions audet moteur (4), celui-à modifiant le débit dans ledet troisième capillaire (2) et donc la concentration de l'élément à analyser dans ladite cellule d'atomisation afin d'éirter une altération de la solution originelle à analyser et des conditions d'étalonnage dudit spectrophotomètre, ladite concentration de l'élément dans ladite solution à analyser étant calculée par le calculateur selon la formule:

$$C=\frac{A}{V}\left(\frac{Cst \cdot Vst}{Ast}\right),$$

dans laquelle

C est la concentration de l'élément dans la solution,

A est le signal de sortie de l'amplificateur,

V est la irtesse d'alimentation de ladite solution à analyser en toute fonction proportionnelle à ladite irtesse,

Cst, Vst, Ast étant des paramètres correspondant respectivement à C, V et A et obtenus au cours de mesures effectuées pendant une phase d'étalonnage, grâce à des solutions de concentration connue.

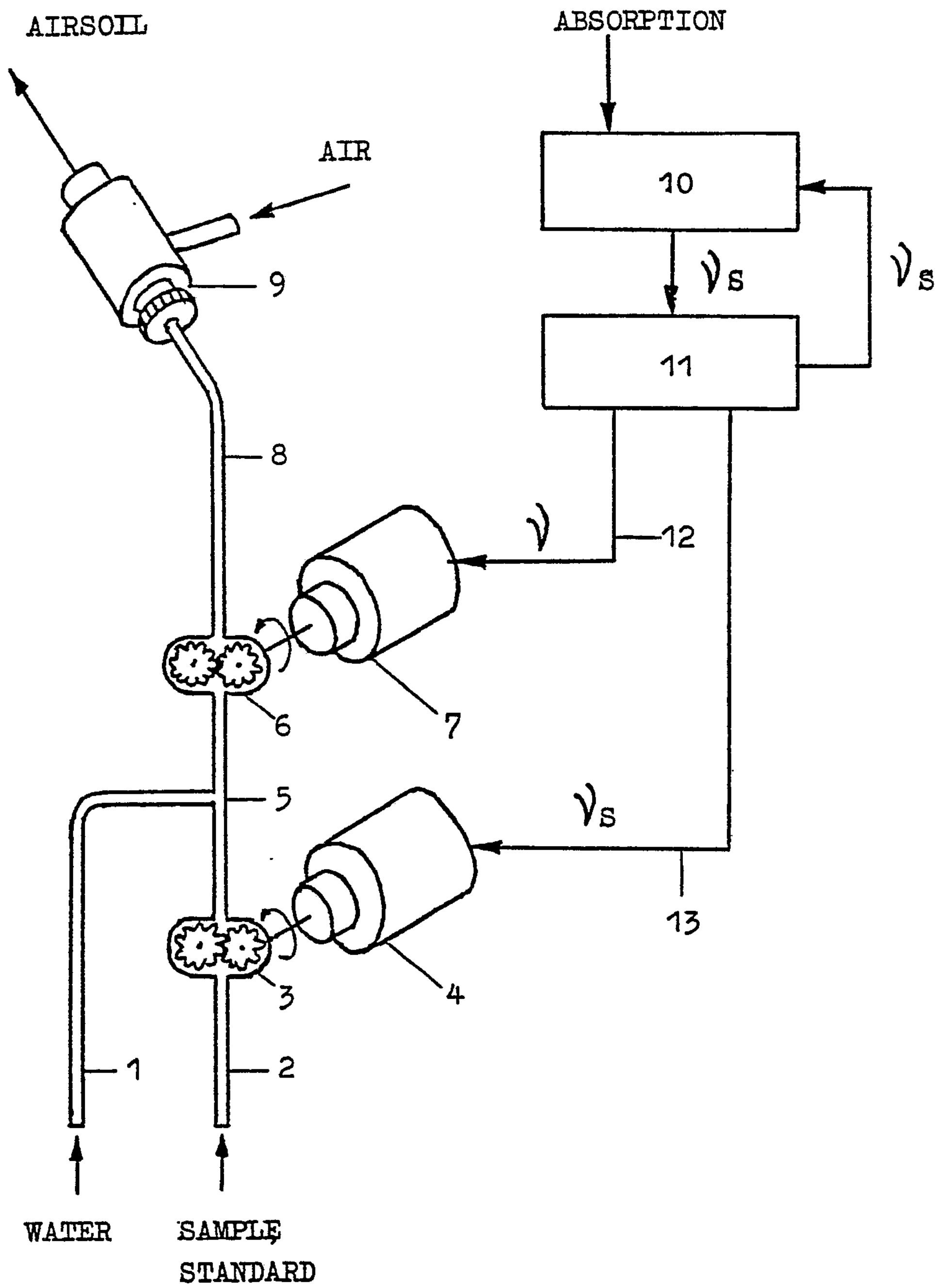
AIRSOIL
ABSORPTION
AIR
10
$\nu_s$
$\nu_s$
9
11
8
$\nu$
12
6
7
5
$\nu_s$
13
3
4
1
2
WATER
SAMPLE
STANDARD

F I G . 1.

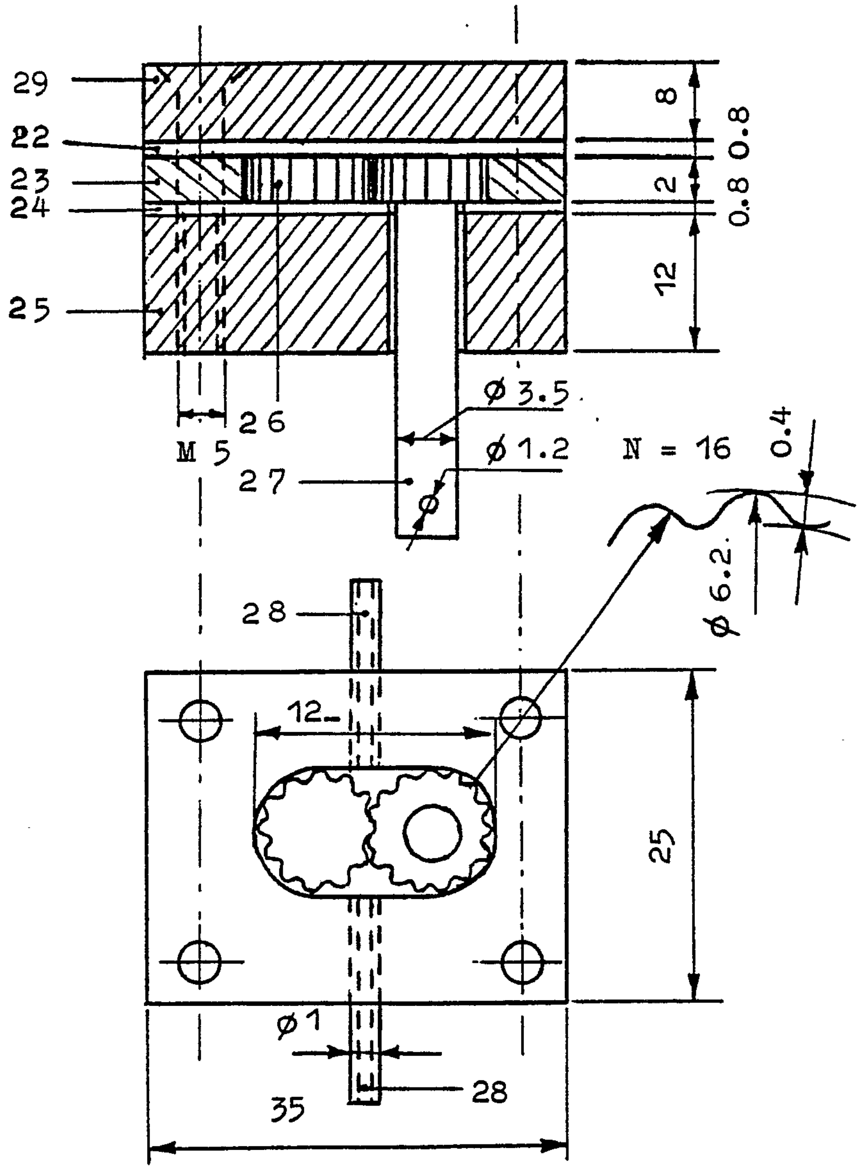
29
22
23
24
25
8
0.8
2
0.8
12
26
M 5
27
Ø 3.5
Ø 1.2
N = 16
0.4
Ø 6.2
28
12
25
Ø 1
28
35

F I G. 2.

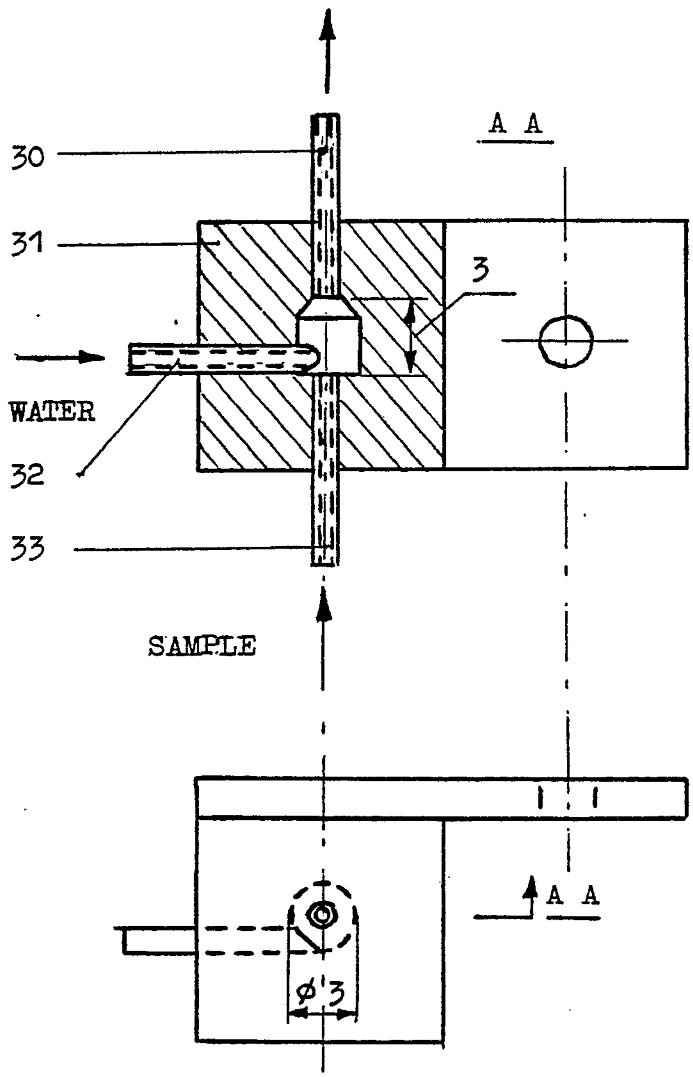


F I G. 3.

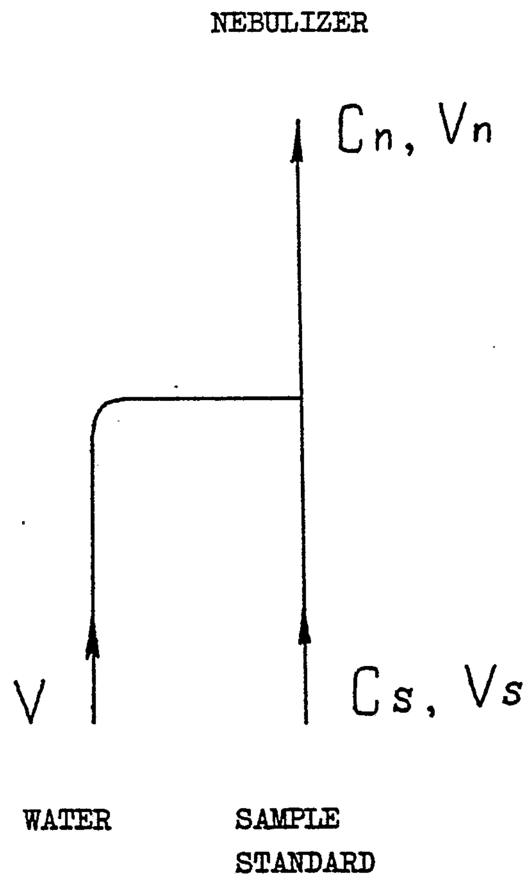


FIG. 4.

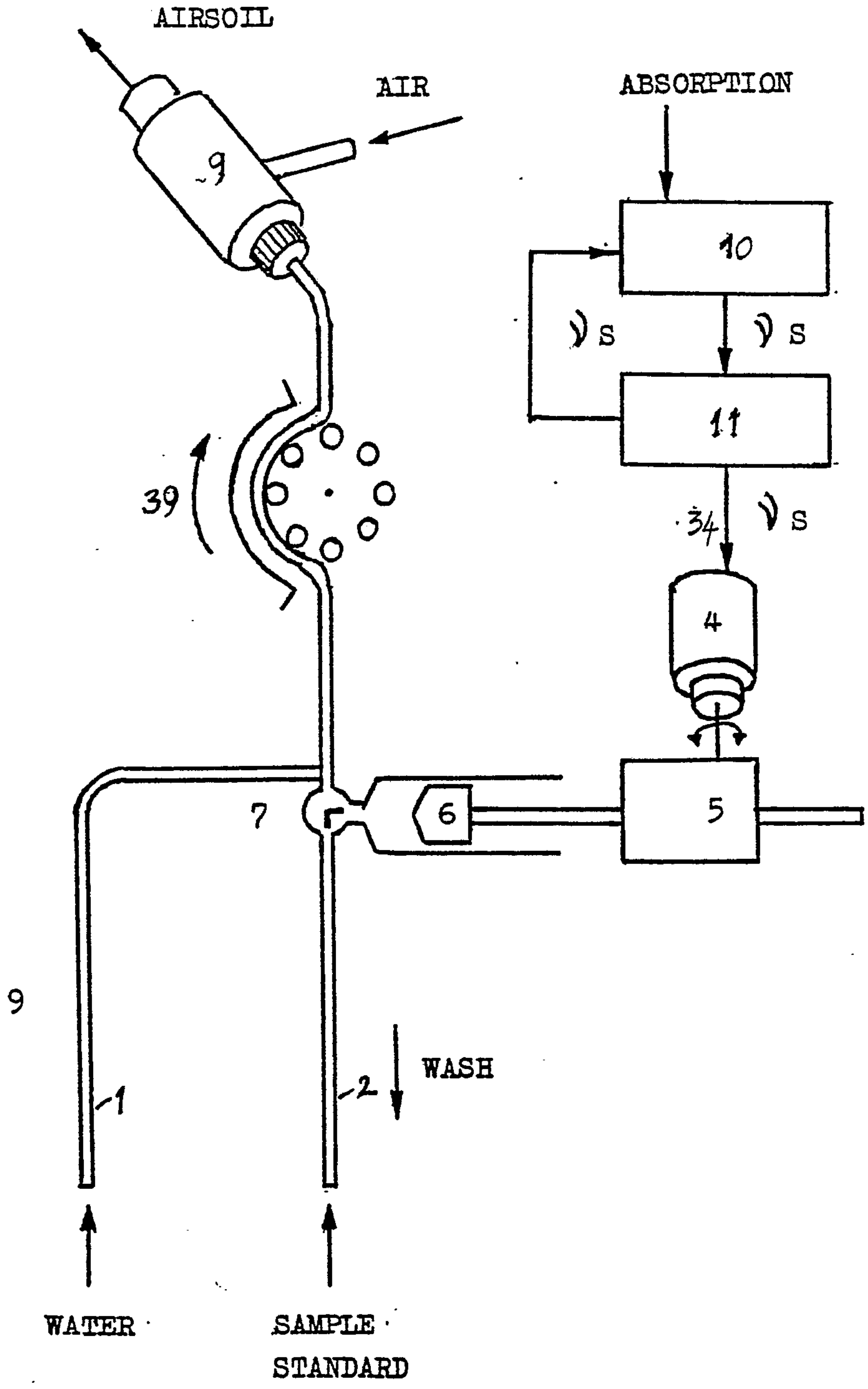
AIRSOIL
AIR
ABSORPTION
9
10
ν s
ν s
11
39
34
ν s
4
7
6
5
9
1
2
WASH
WATER
SAMPLE
STANDARD

F I G . 5 . .

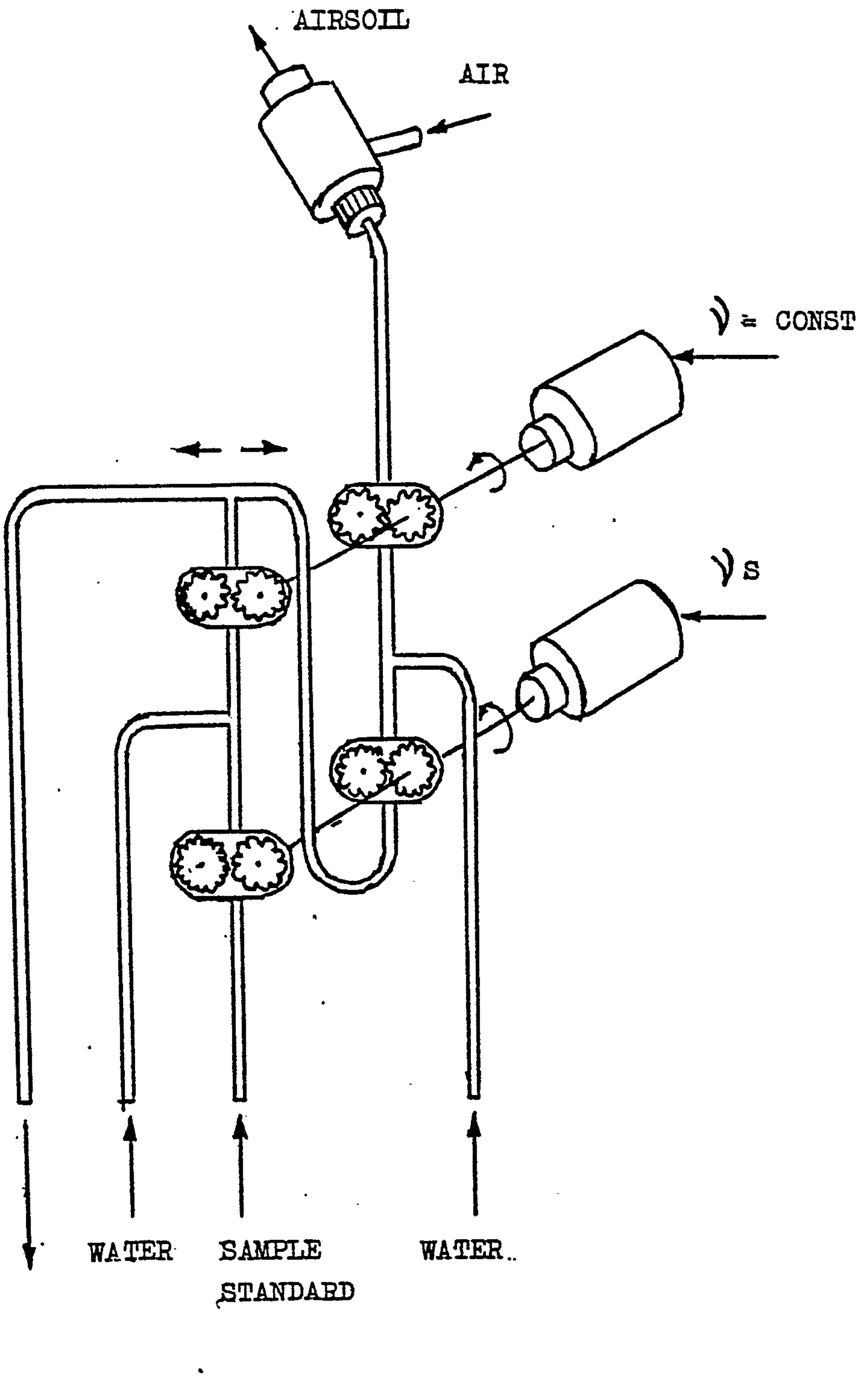


F I G . 6.

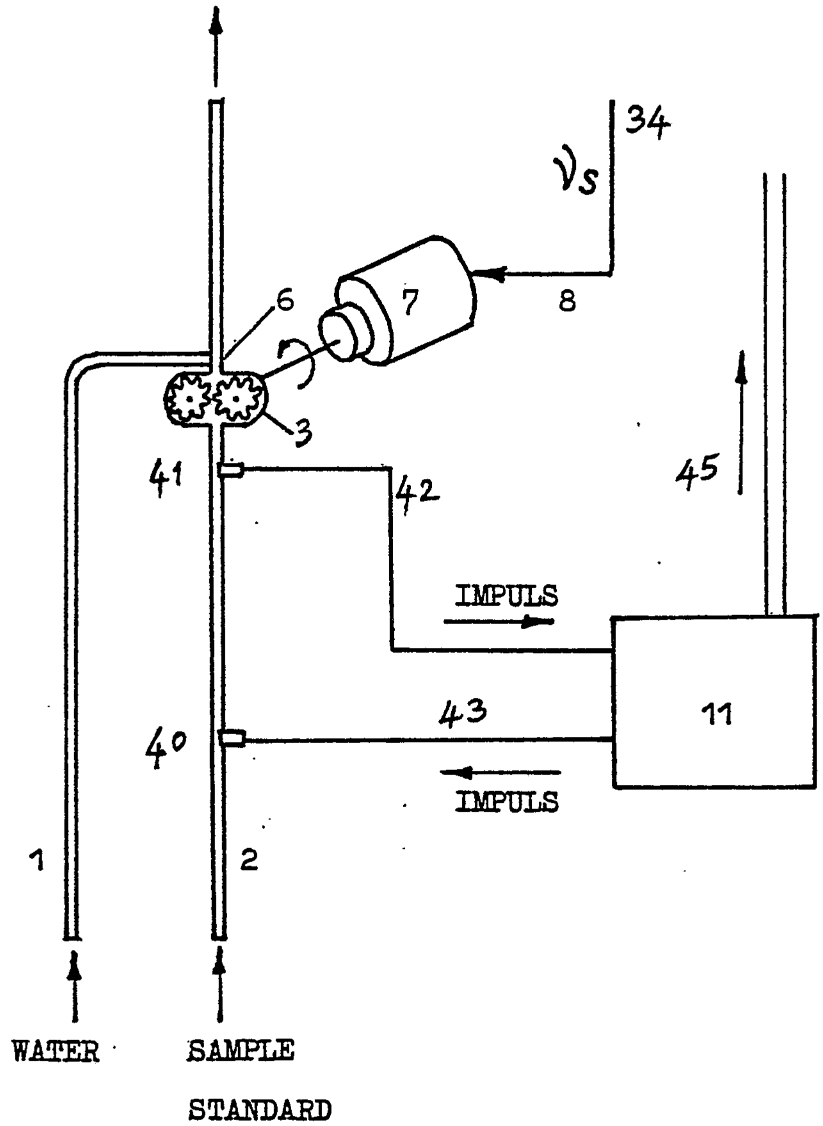
34
$\nu_s$
7
8
6
3
41
42
45
IMPULS
43
11
40
IMPULS
1
2
WATER
SAMPLE
STANDARD

F I G . 7.

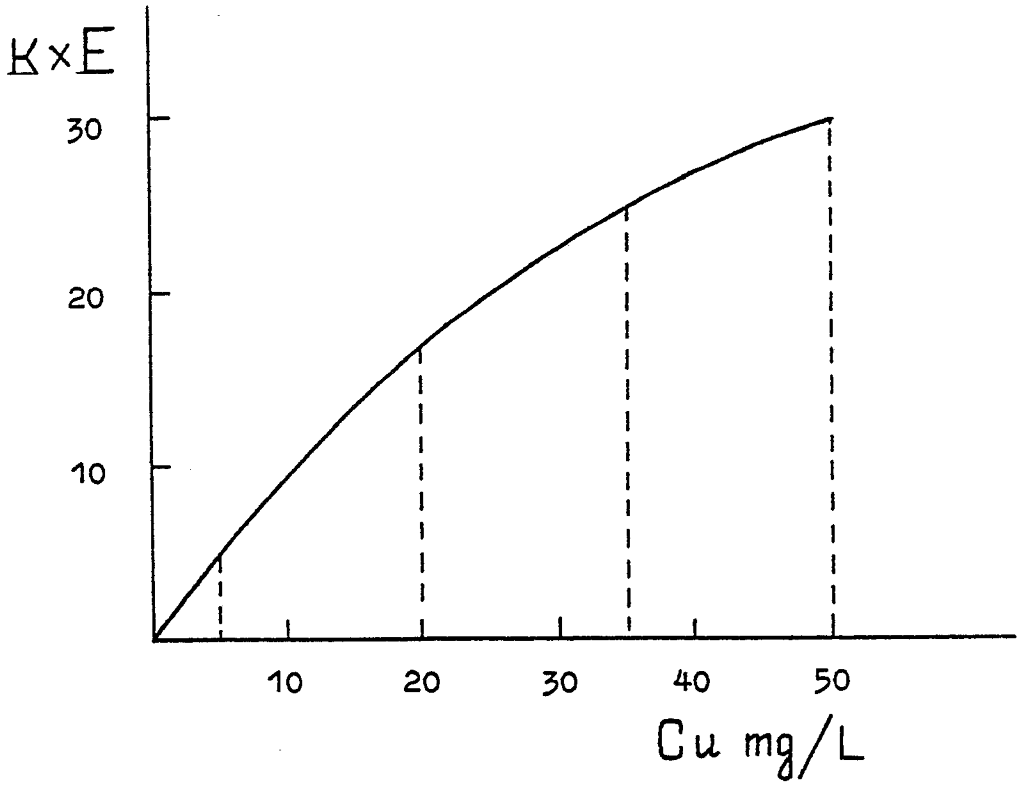


F I G. 8

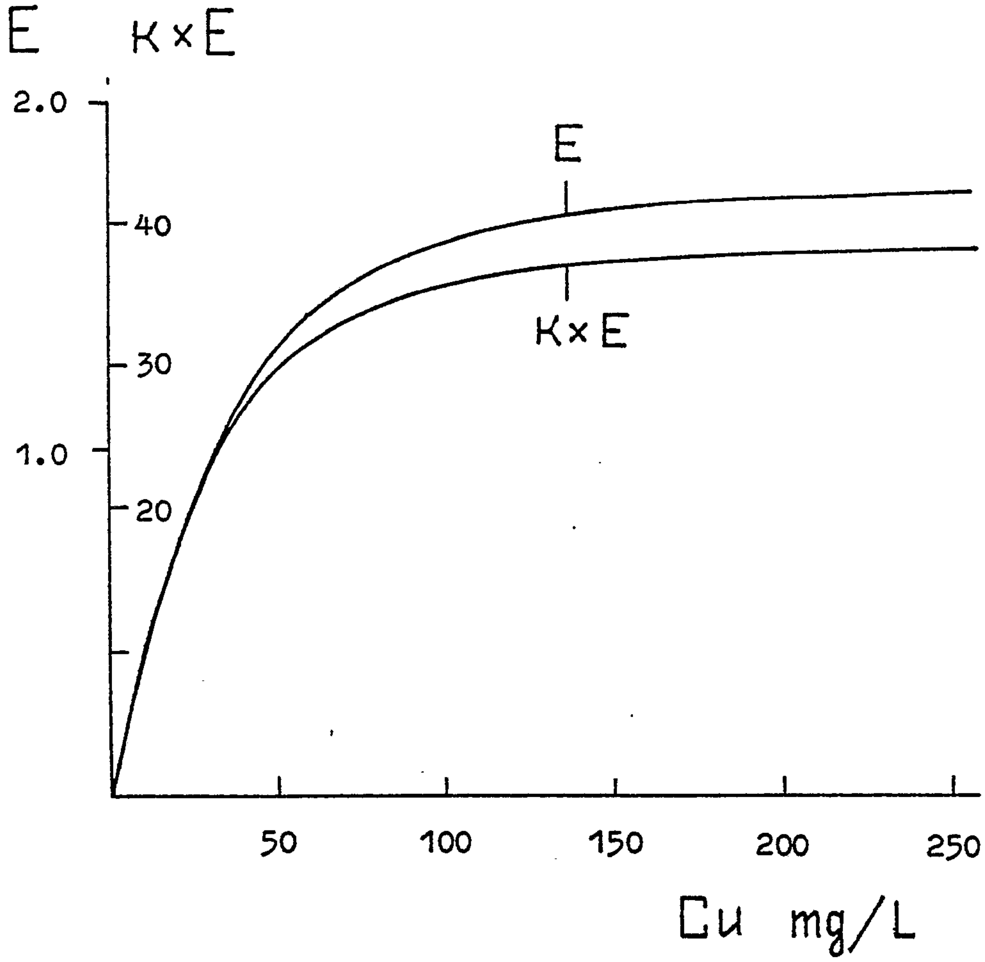


FIG. 9.

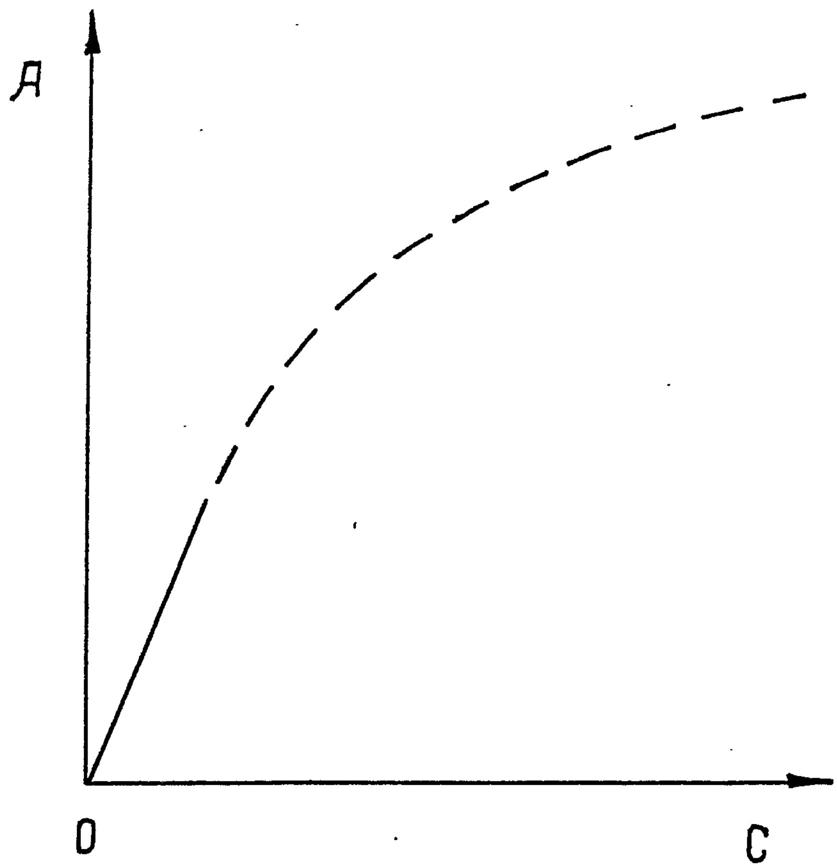


FIG. 10.

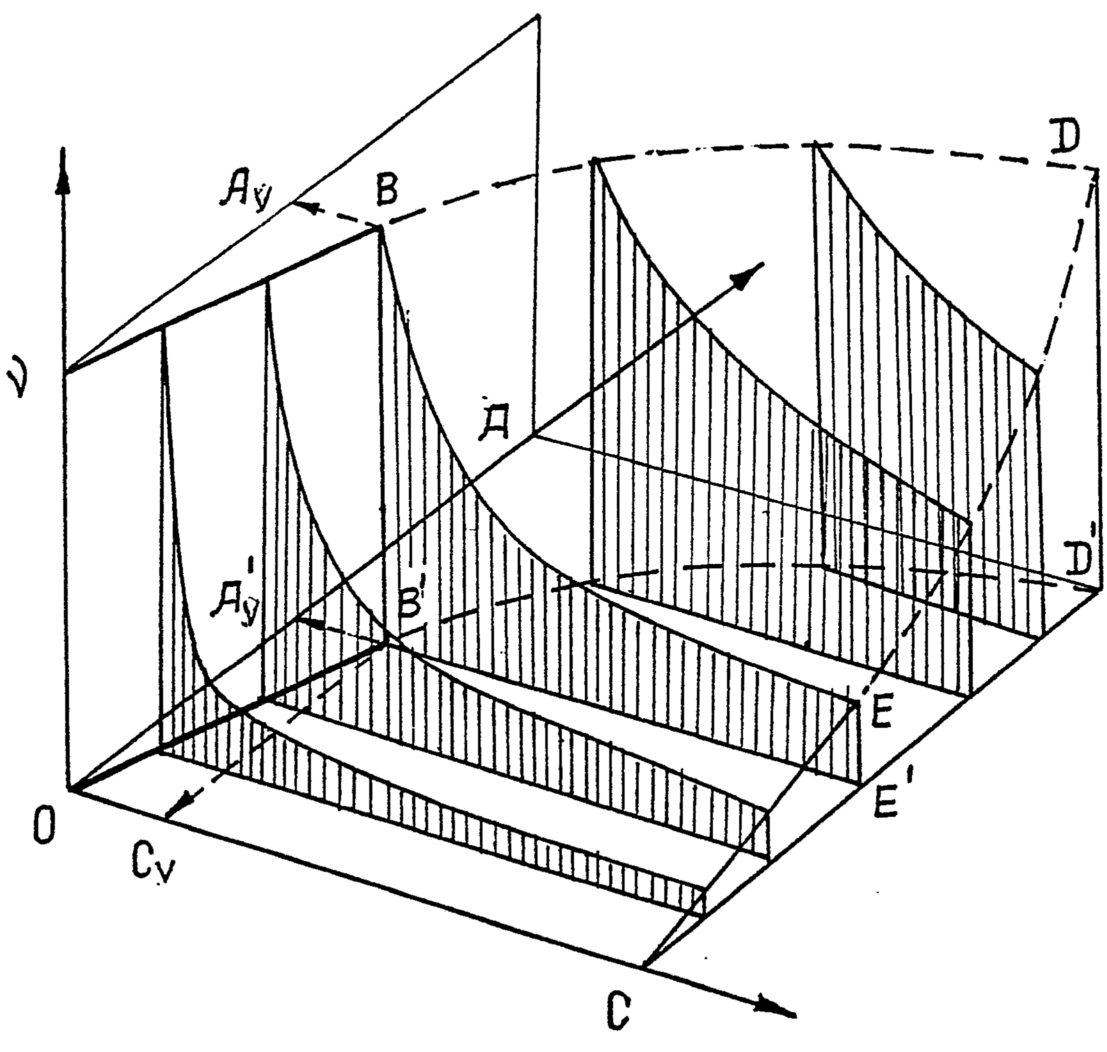


F I G . 11 .

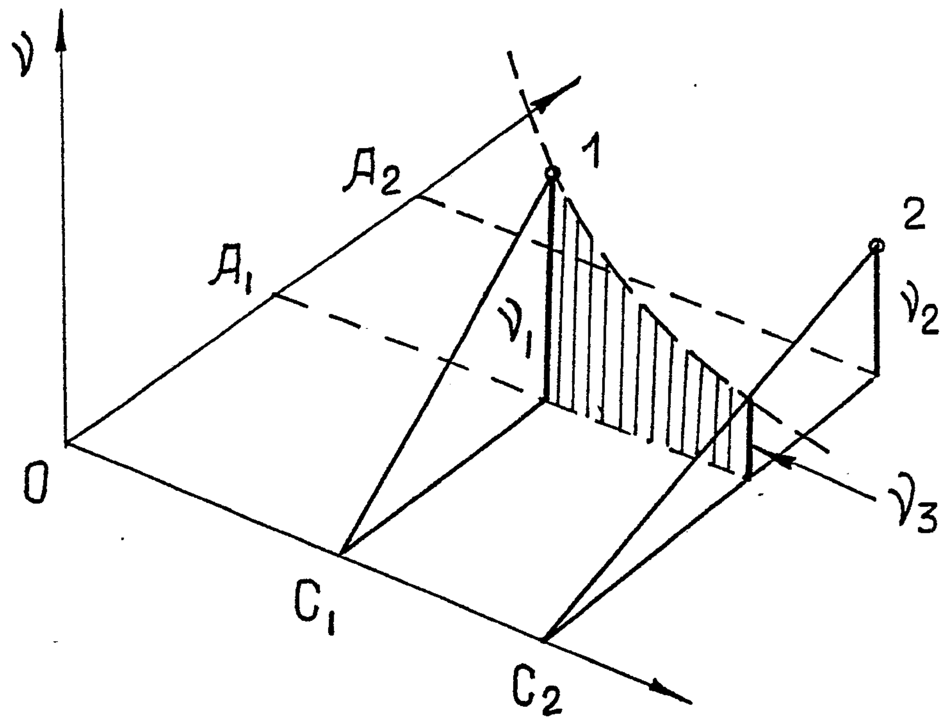


FIG. 12.

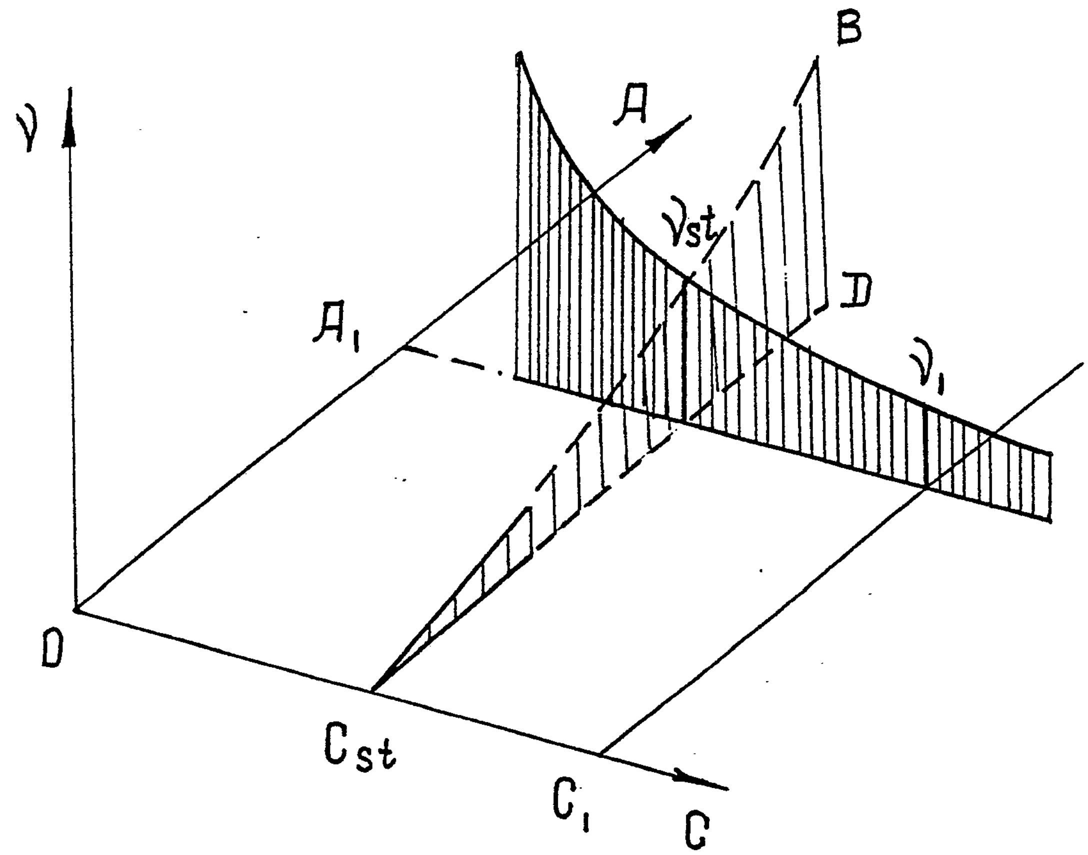


FIG. 13.

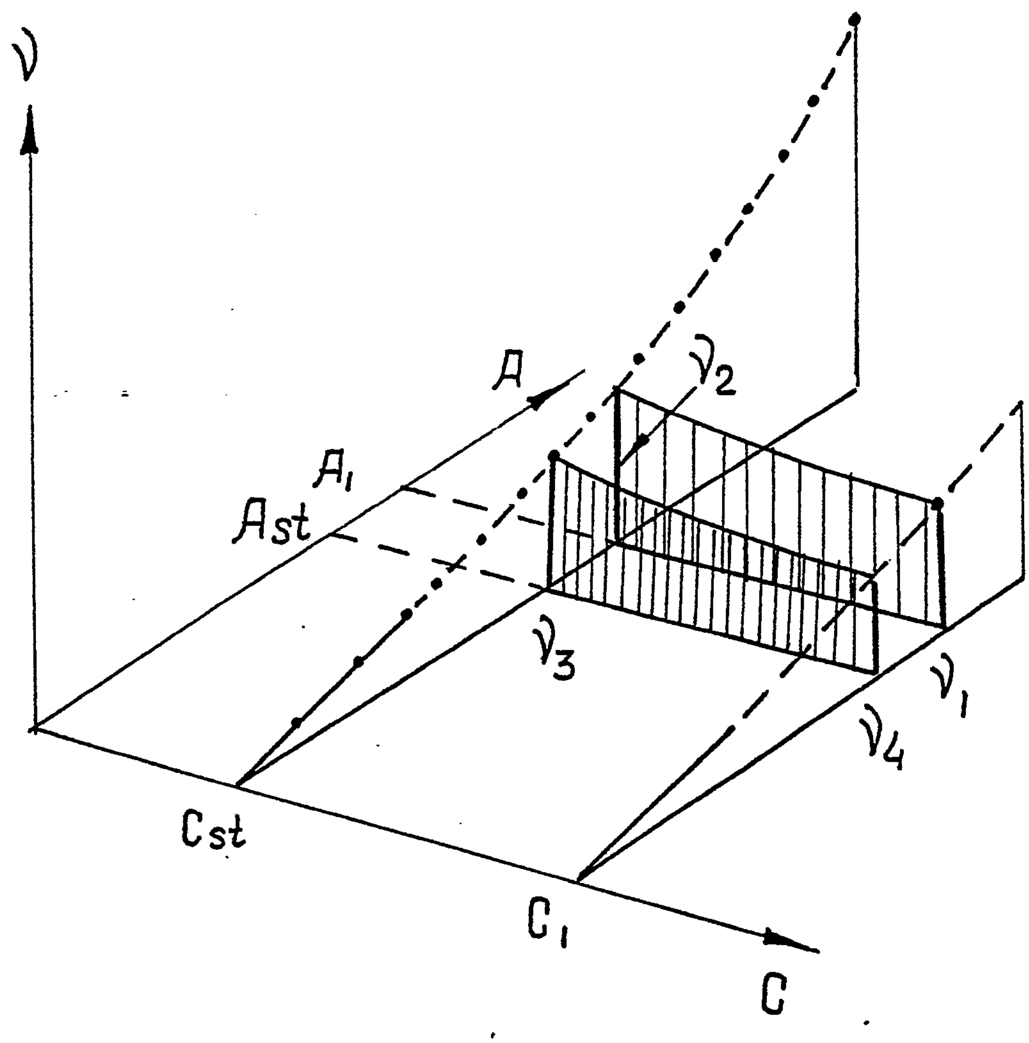


FIG. 14.

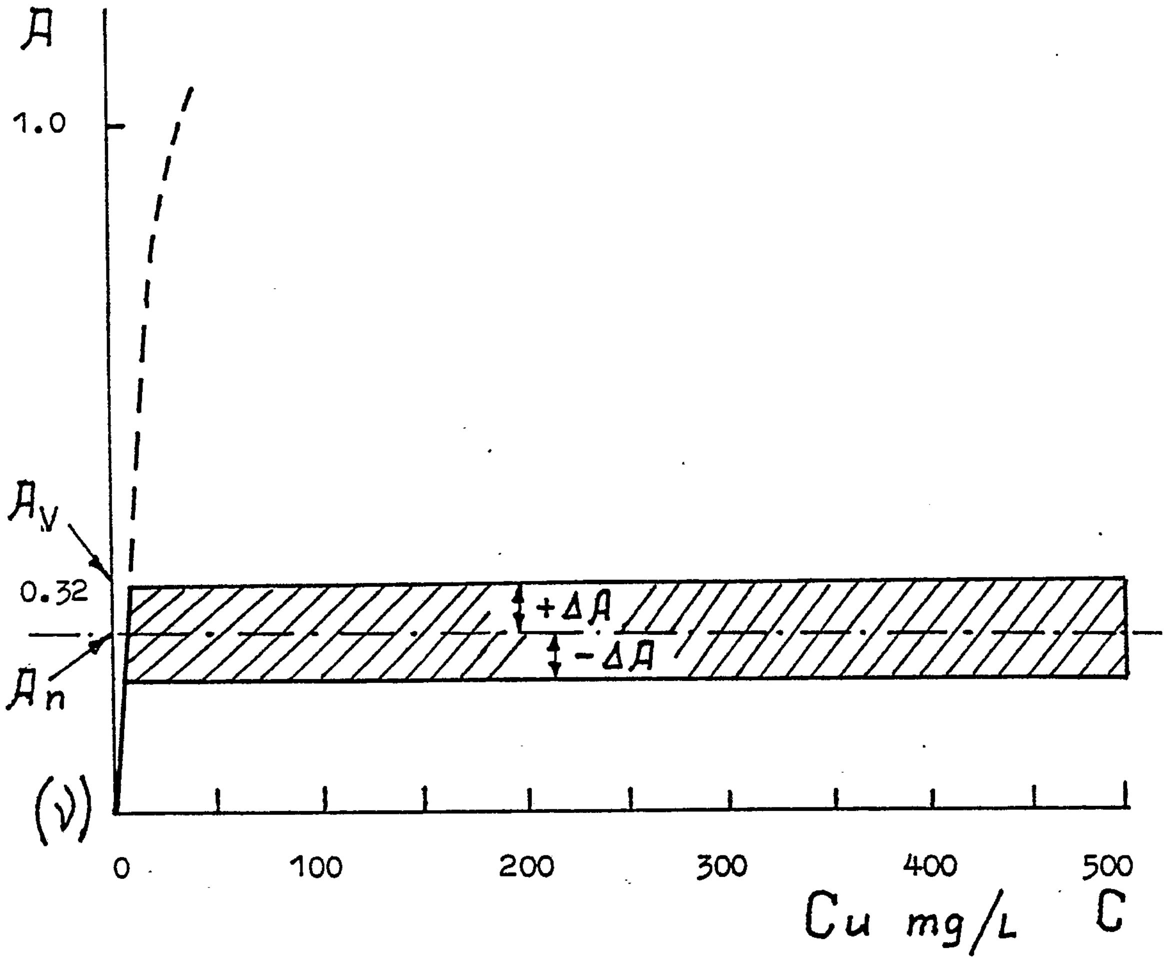


FIG. 15.

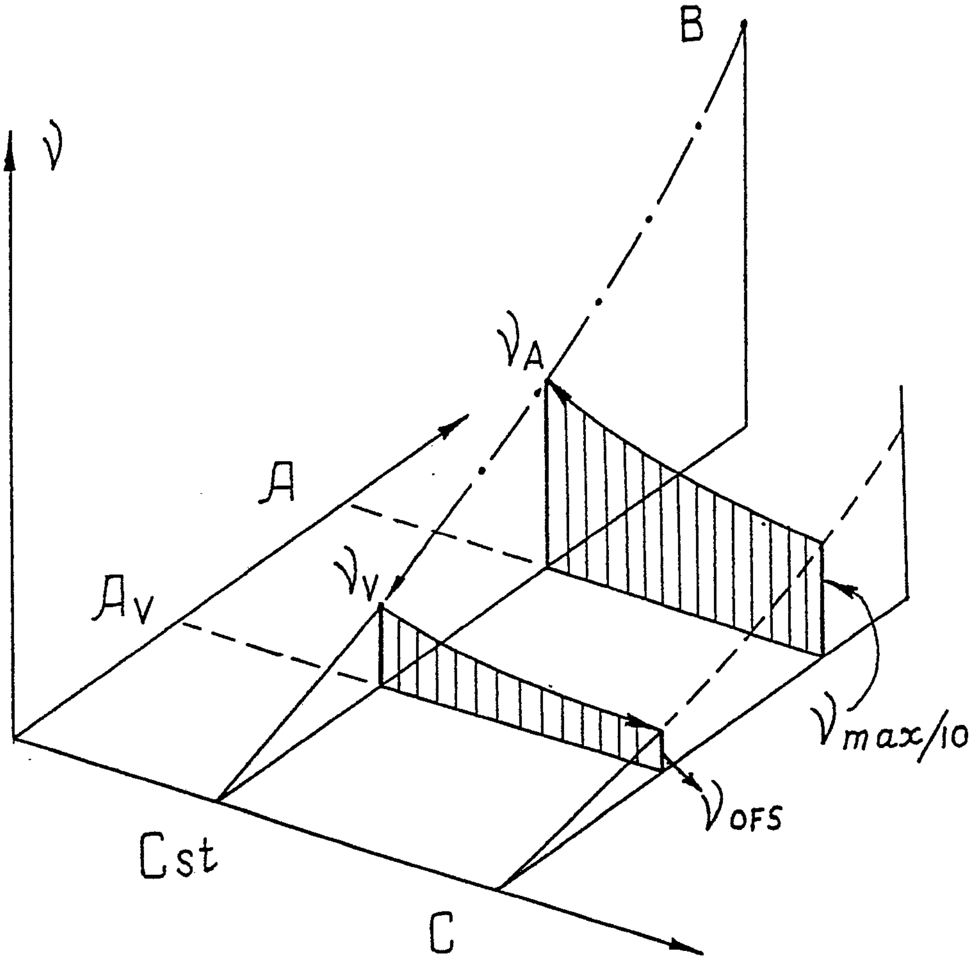


F I G . 16